(19) Europäisches Patentamt / European Patent Office / Office européen des brevets

(11) **EP 2 234 808 B1**

(12) **EUROPEAN PATENT SPECIFICATION**

(45) Date of publication and mention
of the grant of the patent:
**20.03.2019 Bulletin 2019/12**

(21) Application number: **09701932.7**

(22) Date of filing: **16.01.2009**

(51) Int Cl.:
**B32B 27/12** *(2006.01)*     **B32B 27/32** *(2006.01)*

(86) International application number:
**PCT/US2009/031213**

(87) International publication number:
**WO 2009/091952 (23.07.2009 Gazette 2009/30)**

(54) **COATED SUBSTRATES AND PACKAGES PREPARED THEREFROM**

BESCHICHTETE SUBSTRATE UND DARAUS HERGESTELLTE VERPACKUNGEN

SUBSTRATS REVÊTUS ET EMBALLAGES PRÉPARÉS À PARTIR DE CEUX-CI

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **18.01.2008 EP 08382003**

(43) Date of publication of application:
**06.10.2010 Bulletin 2010/40**

(73) Proprietor: **Dow Global Technologies LLC
Midland, MI 48674 (US)**

(72) Inventors:
• **ARROYO VILLAN, Maria**
  **E-43007 Tarragona (ES)**
• **DOMENECH, Angels**
  **E-43470 La Selva Del Camp (ES)**
• **ZUERCHER, Karl**
  **CH-8833 Samstagern (CH)**

(74) Representative: **Boult Wade Tennant LLP
Verulam Gardens
70 Gray's Inn Road
London WC1X 8BT (GB)**

(56) References cited:
**WO-A-2007/008753**

• **DATABASE WPI Week 199614 Thomson
Scientific, London, GB; AN 1996-135576
XP002529942 & JP 08 026332 A (KAGAWA S) 30
January 1996 (1996-01-30) & DATABASE
EPODOC EUROPEAN PATENT OFFICE, THE
HAGUE, NL; & JP 08 026332 A (TEIJIN LTD;
KAGAWA SEIJI; KANAE KK) 30 January 1996
(1996-01-30)**

**Description**

BACKGROUND OF INVENTION

Heavy Duty Shipping Sacks (HDSS), especially the ones designed to contained powder materials, such as cement, are conventionally made of paper. The main advantage of using paper over a plastic material is the better permeability of the paper. As a result of the improved permeability, air can be released during the filling process of the paper sack, and the sack can be filled at high speeds.

The introduction of plastics into the HDSS market has been successful for higher particle size granules. In the chemical industry, a significant amount of paper has been replaced by polyethylene, typically in the form of pre-made bags or form fill and seal systems (FFS). Plastics, in general, have many property advantages over paper, such as increase barrier to moisture. Heavy duty sacks can also be fabricated with polypropylene woven or non woven materials, typically laminated with a plastic coating to improve moisture barrier.

International Publication No. WO 2007/008753 discloses a perforated film composition for flexible packaging, and comprising at least three layers, and wherein at least one layer is a inner layer with a softening and/or melting temperature, lower than the respective softening and/or melting temperatures of at least two outer layers, located at opposite surfaces of the inner layer, and where upon exposure to elevated temperature, the inner layer softens or melts to such an extent, that upon exposure to a compression force, a sufficient number of perforations seal in the inner layer, to impart an increased moisture barrier to the overall film composition.

U.S. Publication No. 2006/0037884 discloses a method of making and filling a plastic bag, which includes the steps of providing a bag having a plurality of microperforations; filling the bag with a powdered product; securing the bag; removing at least a portion of entrapped air in the bag through the microperforations; and sealing the microperforations.

Additional flexible packages are disclosed in U.S. Patent Nos. 6,101,685; U.S. 5,988,881; U.S. 6,235,658; U.S. 4,291,082; U.S. 5,493,844; U.S. 4,657,610; U.S. 5,845,995; U.S. Publication Nos. 2003/082969; 2007/0178784; and International Publication Nos. 2006/023205; 2007/050559; 1998/01300; 1991/03374.

There is a need for low cost, heavy duty sacks that can be used to package fine powder materials at high filling speeds, and which provide a good barrier to moisture. There is a further need for such sacks that have good toughness and other mechanical properties, have good printability, and are less susceptible to contamination. Some of these needs and others have been met by the following invention.

SUMMARY OF THE INVENTION

A perforated coated substrate comprising at least the following:

  i) a first layer,
  ii) a second layer, and
  iii) a woven and/or nonwoven web;

wherein the first layer is adjacent to the second layer, and wherein the second layer is adjacent to the web; wherein the second layer has a lower softening and/or melting temperature, as compared with the respective softening and/or melting temperatures of the first layer, and respective softening and/or melting temperatures of the web;
wherein the layers of the coated substrate have perforations with a common center;
wherein the second layer is formed from a composition comprising a propylene-based polymer; and
wherein the composition used to form the second layer has a Vicat softening point at least 20°C lower than the respective softening point of the composition used to form first layer;
wherein the coated substrate is formed by coextruding at least the first layer and the second layer on top of the web; and
wherein the web is located as an exterior layer of the perforated coated substrate.

DETAILED DESCRIPTION OF THE INVENTION

As discussed above, the invention provides a perforated coated substrate comprising at least the following:

  i) a first layer,
  ii) a second layer, and
  iii) a woven and/or nonwoven web;

wherein the first layer is adjacent to the second layer, and wherein the second layer is adjacent to the web;

wherein the second layer has a lower softening and/or melting temperature, as compared with the respective softening and/or melting temperatures of the first layer, and the respective softening and/or melting temperatures of the web; and

wherein the layers of the coated substrate have perforations with a common center;

wherein the second layer is formed from a composition comprising a propylene-based polymer; and

wherein the composition used to form the second layer has a Vicat softening point at least 20°C lower than the respective softening point of the composition used to form first layer;

wherein the coated substrate is formed by coextruding at least the first layer and the second layer on top of the web; and

wherein the web is located as an exterior layer of the perforated coated substrate.

The second layer is located between the first layer and the web.

In one embodiment, when the coated substrate is exposed to an elevated temperature greater than or equal to, the Vicat temperature of the second layer, the second layer softens or melts to such an extent, that upon exposure to a compression force, a sufficient number of perforations are sealed in the second layer, to impart an increased moisture barrier to the coated substrate. In a further embodiment, the exposure to the elevated temperature and the exposure to the compression force take place simultaneously.

In one embodiment, the resistance to water penetration of the coated substrate is determined using Hydrostatic Pressure Test ISO 811:1981.

In one embodiment, the moisture barrier of the coated substrate is determined using Water Vapor Transmission Rate Test TAPPI 523 om-02.

In one embodiment, the moisture properties of the coated substrate is determined using Hydrostatic Pressure Test ISO 811:1981 and Water Vapor Transmission Rate Test TAPPI 523 om-02.

The second layer is formed from a composition comprising a propylene-based polymer. In one embodiment, the propylene-based polymer is selected from propylene-based interpolymers. In another embodiment, the propylene-based polymer has a melt flow rate (MFR) from 1 g/10 min to 100 g/10 min. In another embodiment, the propylene-based polymer has a density from 0.84 to 0.92 g/cc.

In one embodiment, the composition of the second layer further comprises an ethylene-base polymer and/or an olefin multi-block interpolymer.

In one embodiment, the second layer is formed from a composition comprising an ethylene-based polymer. In a further embodiment, the ethylene-based polymer is a homogeneously branched linear ethylene/$\alpha$-olefin interpolymer. In another embodiment, the ethylene-based polymer is a homogeneously branched substantially linear ethylene/a-olefin interpolymer. In another embodiment, the ethylene-based polymer is an ethylene-ethyl acrylate polymer. In another embodiment, the ethylene-based polymer is an ethylene acrylic acid polymer.

In one embodiment, the ethylene-based polymer has a melt index ($I_2$) from 1 g/10 min to 100 g/10 min. In one embodiment, the ethylene-based polymer has a density from 0.86 to 0.94 g/cc.

In one embodiment, the second layer is formed from a composition comprising from 15 to 50 weight percent, preferably from 20 to 40 weight percent of a low density polyethylene, based on the weight of the composition, and from 50 to 85 weight percent, preferably from 60 to 80 weight percent of a propylene-based polymer, preferably a propylene/ethylene interpolymer, and more preferably a propylene/ethylene copolymer, based on the weight of the composition. In a further embodiment, the composition has a MFR from 10 to 30 mg/10 min, preferably from 15 to 20 g/10 min (230C/2.16 kg). In a further embodiment, the composition has a density from 0.87 to 0.90 g/cc.

In one embodiment, the first layer is formed from a composition comprising at least one polymer selected from the group consisting of the following: a polypropylene homopolymer, a propylene/ethylene interpolymer, a propylene/$\alpha$-olefin interpolymer, a LLDPE (linear low density polyethylene), a HDPE (high density polyethylene), a LDPE (low density polyethylene), and a combination thereof.

In one embodiment, the first layer is formed from a composition comprising at least one polymer selected from the group consisting of the following: a polypropylene homopolymer, a propylene/ethylene interpolymer, a LDPE, and a combination thereof.

In one embodiment, the first layer is formed from a composition comprising a blend of a polypropylene homopolymer and a LDPE. In a further embodiment, the LDPE is present in an amount from 10 to 30 weight percent, preferably from 15 to 20 weight percent, based on the weight of the composition, and polypropylene homopolymer is present in an amount from 50 to 85 weight percent, preferably from 60 to 80 weight percent, based on the weight of the composition.

In one embodiment, the first layer is formed from a composition comprising a blend of a bimodal ethylene-based polymer interpolymer, preferably a bimodal ethylene-based interpolymer, and a LDPE. In a further embodiment, the LDPE is present in an amount from 15 to 30 weight percent, preferably from 20 to 25 weight percent, based on the weight of the composition, and bimodal ethylene-based polymer, preferably a bimodal ethylene-based interpolymer, is present in an amount from 70 to 85 weight percent, preferably from 75 to 80 weight percent, based on the weight of the composition.

In one embodiment, the first layer is formed from a composition comprising greater than, or equal to, 10 weight percent of a LDPE, based on the total weight of the composition, and greater than, or equal to, 50 weight percent of a propylene/ethylene interpolymer, preferably a propylene/ethylene copolymer, based on the total weight of the composition.

In one embodiment, the first layer is formed from a composition comprising greater than, or equal to, 20 weight percent of a LDPE, based on the total weight of the composition, and greater than, or equal to, 70 weight percent of a propylene/ethylene interpolymer, preferably a propylene/ethylene copolymer, based on the total weight of the composition.

In one embodiment, the composition used to form the first layer and/or the composition used to form the second layer do not contain a polar polymer. In a further embodiment, the polar polymer is selected from polyurethanes, polyamides, polyesters, epoxies, or combinations thereof.

In one embodiment, the composition used to form the first layer and/or the composition used to form the second layer do not contain a HDPE.

In one embodiment, the composition used to form the first layer and/or the composition used to form the second layer do not contain a polymer modified with a polar modifying agent, for example molecules containing anhydride, amine, and/or acid functionalities.

In one embodiment, component iii) is a woven web. In a further embodiment, the woven web is formed from a composition comprising a propylene-based polymer.

In one embodiment, component iii) a nonwoven web. In a further embodiment, the nonwoven web is formed from a composition comprising a propylene-based polymer.

The first layer is adjacent to the second layer, and the second layer is adjacent to the web.

In one embodiment, the coated substrate consists of the first layer, the second layer and the web.

The composition used to form the second layer has a Vicat softening point at least 20°C lower than the respective softening point of the composition used to form the first layer.

In one embodiment, the composition used to form the second layer has a Vicat softening point at least 30°C lower than the respective softening point of the composition used to form the first layer.

In one embodiment, the composition used to form the second layer has a Vicat softening point at least 40°C lower than the respective softening point of the composition used to form the first layer.

In one embodiment, the composition used to form the first layer has a Vicat softening point from 110 to 140°C, and the composition used to form the second layer has a Vicat softening point from 40 to 80°C, preferably from 45 to 75°C.

In one embodiment, the thickness of the second layer is less than, or equal to 100 microns, preferably less than, or equal to, 80 microns, as determined by optical microscopy.

In one embodiment, the grammage of the second layer is from 5 to 30 g/m2, preferably from 5 to 20 g/m$^2$.

In one embodiment, the perforations are of sizes that are, individually, greater than, or equal to, 10 microns.

In one embodiment, the perforations are of sizes that are, individually, greater than, or equal to, 20 microns.

In one embodiment, the perforations are of sizes that are, individually, greater than, or equal to, 50 microns.

In one embodiment, the sizes of the perforation are from 45 to 60 microns.

In one embodiment, the perforations are of sizes that are, individually, greater than, or equal to, 100 microns.

In one embodiment, the perforations are of sizes that are, individually, less than, or equal to, 1000 microns.

In one embodiment, the perforations are of sizes that are, individually, less than, or equal to, 700 microns.

In one embodiment, the perforations are of sizes that are, individually, less than, or equal to, 500 microns.

In one embodiment, the perforations are of sizes that are, individually, less than, or equal to, 300 microns.

The coated substrate is formed by coextruding at least the first layer and the second layer on top of the web.

In one embodiment, the coated substrate is formed by an extrusion coating process.

A coated substrate may have a combination of two or more embodiments as described herein.

As discussed above, the invention provides for a perforated coated substrate, which when formed into a package, can be filled effectively, under pressurized conditions, with powdery materials, and which, upon exposure to elevated temperature and applied compression force, forms a moisture barrier. The inventive coated substrates are perforated, and comprise a first layer, a second layer, and a woven and/or nonwoven web. The second layer has a lower softening and/or melting temperature, as compared with the respective softening and/or melting temperatures of the first layer and the web.

Upon exposure to elevated temperature, greater than, or equal to, the Vicat temperature of the second layer, the second layer softens to a sufficient extent, that upon exposure to a compression force, a sufficient number of perforations are sealed in the second layer, to impart an in moisture barrier to the overall coated substrate. The increase in moisture barrier, due to the sealing of perforations, helps to prevents water, predominantly in liquid form, from passing from the exterior of the coated substrate to the interior of the coated substrate, and vise-versa. The increase in moisture barrier can be measured by a water vapor transmission test (for example, WVTR TAPP1 523 om-02), and resistance to water penetration can be measured by a water pressure test such as a water pressure test (hydrostatic pressure test (for example, ISO811:1981; or hydrohead water pressure test ISO 140 A1).

The thermally treated second layer flows upon application of a compression force, to seal open perforations, This "flowability" of the material will depend, in part, on the temperature applied, the pressure applied, the thickness of all the layers, the softening temperature and/or melting temperature of the second layer, and/or the flow properties of the inner layer.

The exposure to the elevated temperature and the exposure to the compression force may occur simultaneously, or sequentially, with the temperature exposure occurring prior to the compression force. In one embodiment, the coated substrate is exposed to a temperature of 50°C or higher, and to a compression force of 30-60 kPa. In another embodiment, the second layer has a Vicat softening point at least 20°C lower than the respective softening points of the outer layer and the web layer. In another embodiment, the second layer has a Vicat softening point at least 30°C lower than the respective softening points of at first layer and the web layer.

Packages formed from the coated substrates of the invention can hold powdery goods of various sizes. In one embodiment, the particle size of such goods may range from 1 $\mu$m to 100 $\mu$m. The particle can be any shape, such as spherical or irregularly shaped and non-uniform.

The coated substrates of the invention can be used for the packaging of any type of goods, including particulate, powder, granular and bulk goods, and, in particular, for the packaging of moisture sensitive goods, and moisture sensitive powdery goods. A package formed from the coated substrate composition of the invention is especially useful in the packaging of powdery goods, such as cement, lime, talc, talcum powder, polyvinyl chloride, gypsum, cocoa, corn flour, flour and powdery sugar.

A package prepared from an inventive coated substrate can be thermally or mechanically treated with additional processing steps, as required for the particular packaging needs. However, the invention provides a coated substrate that can be transformed upon heat and stress during routine powder packaging process steps, without the need for an additional processing step, or the alteration of a processing step. In the typical powder filling process, the heat generated during the filling of a bag can increase the bag temperature as high as 100°C. In addition, in the typical filling process, the filled bags are immediately pressed into a series of rolls for air release. Also, a package can be simultaneously subjected to both elevated temperature and compression force via air removal rolls that are heated to a specified temperature.

A coated substrate of the invention is then breathable during the fill process, and can be used as a flexible package for difficult powder fillings. After filling, the coated substrate composition can be heated to a temperature sufficient to soften and/or melt at least one inner layer, but not sufficient to impair the structural integrity of at least two outer layers.

An increase in the temperature of the coated substrate may be effected by various heating mechanisms, including, but are not limited to, contact heating, such as heated rollers; convection heating, such as hot air; and alternative heating sources, such as infrared (IR), microwave (MW), radio frequency (RF), and impulse heating. Some of these heating mechanisms may require one or more receptive components in one or more layers, and preferably in the second layer. These receptors or heat transfer agents serve to absorb and transfer heat to the surrounding polymer matrix. Such materials may include polar substances or polymers (vinyl polymers, ECO polymers, siloxanes) or other substances/particles (metal, carbon black), or combinations thereof.

The coated substrate should be subject to an elevated temperature, sufficient to soften or partially melt the second layer, and then subject to a subsequent compression force to force the softened resin over open perforations. The compression force can be applied by passing the coated substrate through rollers or a series of rollers. The rollers can be maintained at room temperature, or heated to a certain temperature, depending on the application. At the end of such a process, a significant portion, or all of the perforations, in the second layer are sealed, imparting an increased moisture resistant barrier on the coated substrate.

The perforations within a coated substrate may be of any size or shape, including, but not limited to, holes of varying degrees of circularity, various triangular shapes, various rectangular shapes and other polygon shapes, irregular shapes and slits. In one embodiment, the pores have a circular shape. In one embodiment of the invention, the layers (or plies) have perforations of the same size or size gradient. A pore size typically represents the diameter of the pore. The coated substrate may have a perforation density of at least 350,000 microns$^2$/inch$^2$, preferably at least 500,000 microns$^2$/inch$^2$.

The coated substrate may have an average number density of perforations or holes from 6 to 50 holes/inch$^2$, and, preferably, an average individual hole area of from 10,000 microns$^2$ to 70,000 microns$^2$. The size of the perforations will vary, depending on the size of the contained goods. Perforation size may range from 10 $\mu$m to 100 $\mu$m, 50 $\mu$m to 1000 $\mu$m, or higher. All individual values and subranges from 10 $\mu$m to 1000 $\mu$m are included herein and specifically disclosed herein.

In one embodiment, the coated substrate has a thickness from 20 $\mu$m (microns) to 1000 $\mu$m, preferably from 20 $\mu$m to 500 $\mu$m, more preferably from 20 $\mu$m to 250 $\mu$m. All individual values and subranges from 20 $\mu$m to 1000 $\mu$m are included herein and specifically disclosed herein. Coated substrates may also have a thickness greater than 1000 $\mu$m.

In one embodiment, a package prepared from a coated substrate of the invention may hold a weight from 1 kg to 100 kg, preferably from 1 kg to 50 kg, or 1 to 25 kg.

Typically, the coated substrate composition contains a thermoplastic polymer, and preferably at least one olefin-based polymer. The amount of the thermoplastic polymer in the coated substrate composition will vary depending on the properties desired, for example, coated substrate strength properties, on other coated substrate components, and on the type or types of polymer employed. Generally, the amount of olefin-based polymer in the coated substrate is at least 50 percent, preferably at least 60 percent, more preferably at least 70 percent, by weight of the total weight of the coated substrate.

For each polymer composition used to form a coated substrate layer, one or more stabilizers and/or antioxidants may be added to protect the final resin from degradation, caused by reactions with oxygen, which are induced by such things as heat, light or residual catalyst from the raw materials. Antioxidants are commercially available from Ciba-Geigy, located in Hawthorn, N.Y., and include IRGANOX 565, 1010 and 1076, which are hindered phenolic antioxidants. These are primary antioxidants which act as free radical scavengers, and may be used alone or in combination with other antioxidants, such as phosphite antioxidants, like IRGAFOS 168, available from Ciba-Geigy. Phosphite antioxidants are considered secondary antioxidants, are not generally used alone, and are primarily used as peroxide decomposers. Other available antioxidants include, but are not limited to, CYANOX LTDP, available from Cytec Industries in Stamford, Conn., and ETHANOX 1330, available from Albemarle Corporation in Baton Rouge, Louisiana. Many other antioxidants are available for use by themselves, or in combination with other such antioxidants. Other resin additives include, but are not limited to, ultraviolet light absorbers, antistatic agents, pigments, dyes, nucleating agents, fillers slip agents, fire retardants, plasticizers, processing aids, lubricants, stabilizers, smoke inhibitors, viscosity control agents, and anti-blocking agents.

Propylene-based Polymer

The propylene-based polymers suitable for use in the coated substrates of the invention, include, but are not limited to, propylene homopolymers, propylene/ethylene copolymers, propylene/ethylene/1-butene interpolymers, propylene/ethylene/ENB interpolymers, propylene/ethylene/1-hexene interpolymers, and propylene/ethylene/1-octene interpolymers. Suitable propylene-base interpolymers include VERSIFY polymers (available from The Dow Chemical Company).

Additional propylene-based polymers include VISTAMAXX polymers (ExxonMobil Chemical Co.), LICOCENE polymers (Clariant), EASTOFLEX polymers (Eastman Chemical Co.), REXTAC polymers (Hunstman), and VESTOPLAST polymers (Degussa). Other suitable polymers include ADSYL polymers, ADFLEX polymers, BORSOFT polymers, propylene-$\alpha$-olefins block copolymers and interpolymers, other propylene based block copolymers and interpolymers known in the art, and various blends, such as blends of polypropylene homopolymers and propylene/a-olefin interpolymers.

In one embodiment, the propylene-based polymer has a melt flow rate (MFR) greater than, or equal to, 0.1, preferably greater than, or equal to 0.2, more preferably greater than, or equal to 0.5 g/10 min. In another embodiment, the propylene-based polymer has a melt flow rate (MFR) less than, or equal to, 100, preferably less than, or equal to 50, more preferably less than, or equal to 20 g/10 min. The MFR is measured according to ASTM D-1238 (2.16 kg, 230°C). In one embodiment, the propylene-based polymer is a propylene/ethylene interpolymer, preferably a propylene/ethylene copolymer. In a further embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymer has a melt flow rate (MFR) from 0.1 to 100 g/10 min, preferably from 0.5 to 50 g/10 min. All individual values and subranges from 0.1 to 100 g/10 min, are included herein and disclosed herein. The MFR is measured according to ASTM D-1238 (2.16 kg, 230°C). In one embodiment, the propylene-based polymer is a propylene/ethylene interpolymer. In a further embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymer has a density less than, or equal to, 0.90 g/cc, preferably less than, or equal to, 0.89 g/cc, and more preferably less than, or equal to, 0.88 g/cc (cc = cubic centimeter = $cm^3$). In another embodiment, the propylene-based polymer has a density greater than, or equal to, 0.83 g/cc, preferably greater than, or equal to, 0.84 g/cc, and more preferably greater than, or equal to, 0.85 g/cc. In one embodiment, the propylene-based polymer is a propylene/ethylene interpolymer. In a further embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymer has a density from 0.83 g/cc to 0.90 g/cc, and preferably from 0.84 g/cc to 0.89 g/cc, and more preferably from 0.85 g/cc to 0.88 g/cc. All individual values and subranges from 0.83 g/cc to 0.90 g/cc, are included herein and disclosed herein. In one embodiment, the propylene-based polymer is a propylene/ethylene interpolymer. In a further embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymer has a molecular weight distribution ($M_w/M_n$) less than, or equal to, 6, and preferably less than, or equal to, 5.5, and more preferably less than, or equal to 5. In another embodiment, the molecular weight distribution is greater than, or equal to, 2, preferably greater than, or equal to, 2.5, more preferably greater than, or equal to 3. In one embodiment, the propylene-based polymer is a propylene/ethylene interpolymer. In a further embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymer has a molecular weight distribution ($M_w/M_n$) from 1.5 to 6, and more preferably from 2.5 to 5.5, and more preferably from 3 to 5. All individual values and subranges from 1.5 to 6 are included herein and disclosed herein, In a preferred embodiment, the propylene-based polymer is a propylene/ethylene interpolymer, In one embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the molecular weight distribution ($M_w/M_n$) of the propylene-based polymer is from 2 to 6. In a preferred embodiment, the propylene-based polymer is a propylene/ethylene interpolymer. In one embodiment, the ethylene content of the interpolymer ranges from 0.1 to 30 weight percent, preferably from 0.5 to 25 weight percent, and more preferably from 1 to 20 weight percent, based on the total weight of polymerizable monomers.

In one embodiment, the propylene-based polymers comprise units derived from propylene, in an amount of at least about 60, preferably at least about 80 and more preferably at least about 85, weight percent of the copolymer. The typical amount of units derived from ethylene in propylene/ethylene copolymers is at least about 0.1, preferably at least about 1 and more preferably at least about 5 weight percent, and the maximum amount of units derived from ethylene present in these interpolymers is typically not in excess of about 35, preferably not in excess of about 30 and more preferably not in excess of about 20, weight percent of the interpolymer (based on total weight of polymerizable monomer). The amount of units derived from additional unsaturated comonomer(s), if present, is typically at least about 0.01, preferably at least about 1 and more preferably at least about 5, weight percent, and the typical maximum amount of units derived from the additional unsaturated comonomer(s) typically does not exceed about 35, preferably it does not exceed about 30 and more preferably it does not exceed about 20, weight percent of the interpolymer (based on total weight of polymerizable monomer). The combined total of units derived from ethylene and any unsaturated comonomer typically does not exceed about 40, preferably it does not exceed about 30 and more preferably it does not exceed about 20, weight percent of the interpolymer (based on the total weight of polymerized monomers).

In one embodiment, the propylene-based polymer is an interpolymer of propylene, ethylene and, optionally, one or more unsaturated comonomers, for example, C4-C20 α-olefins, C4-C20 dienes, vinyl aromatic compounds (example, styrene). In a further embodiment, these interpolymers comprise at least about 60 weight percent (wt %) of units derived from propylene, from 0.1 to 35 weight percent of units derived from ethylene, and from 0 to 35 weight percent of units derived from one or more unsaturated comonomers, with the proviso that the combined weight percent of units derived from ethylene and the unsaturated comonomer(s) does not exceed about 40 weight percent (based on total weight of polymerized monomers).

In one embodiment, propylene-based polymer comprises propylene and one or more unsaturated comonomers. These interpolymers are characterized in having at least about 60 weight percent of the units derived from propylene, and from 0.1 to 40 weight percent of the units derived from the unsaturated comonomer(s), Weight percentages based on total weight of polymerized monomers.

Unsaturated comonomers include, but are not limited to, C4-C20 α-olefins, especially C4-C12 α-olefins such as 1-butene, 1-pentene, 1-hexene, 4-methyl-1-pentene, 1-heptene, 1-octene, 1-decene, 1-dodecene and the like; C4-C20 diolefins, preferably 1,3-butadiene, 1,3-pentadiene, norbornadiene, 5-ethylidene-2- norbornene (ENB) and dicyclopentadiene; C8-40 vinyl aromatic compounds including sytrene, o-, m-, and p-methylstyrene, divinylbenzene, vinylbiphenyl, vinylnapthalene; and halogen-substituted C8-40 vinyl aromatic compounds such as chlorostyrene and fluorostyrene.

In one embodiment, the weight average molecular weight (Mw) of the propylene-based polymer is from 30,000 to 1,000,000.

In one embodiment, propylene-based polymers suitable in compositions used to form a layer of an inventive coated substrate, and preferably in the second layer, comprise propylene, and typically, ethylene and/or one or more unsaturated comonomers. Such polymers are characterized as having at least one, preferably more than one, of the following properties: (i) 13C NMR peaks corresponding to a regio-error at about 14.6 and about 15.7 ppm, the peaks of about equal intensity, (ii) a skewness index, $S_{ix}$, greater than about -1.20, (iii) a DSC curve with a $T_{me}$ that remains essentially the same, and a $T_{Max}$ that decreases as the amount of comonomer (i.e., units derived from ethylene and/or the unsaturated comonomer(s)) in the interpolymer is increased, and (iv) an X-ray diffraction pattern that reports more gamma-form crystals than a comparable interpolymer prepared with a Ziegler-Natta catalyst. Preferably the propylene-based interpolymer is a propylene/ethylene interpolymer. Especially preferred propylene-based polymers are the VERSIFY polymers available from The Dow Chemical Company. It is noted that in property (i) the distance between the two 13C NMR peaks is about 1.1 ppm. These propylene-based interpolymers are made using a nonmetallocene, metal-centered, heteroaryl ligand catalyst. These polymers can be blended with other polymers. Typically such interpolymers are characterized by at least one, preferably at least two, more preferably at least three, and even more preferably all four, of these properties. The preparation of such interpolymers are described in U.S. Patent 6,919,407, column 16, line 6 to column 45, line 43.

With respect to the X-ray property of subparagraph (iv) above, a "comparable" interpolymer is one having the same monomer composition within 10 weight percent, and the same $M_w$ (weight average molecular weight) within 10 weight percent. For example, if an inventive propylene/ethylene/1-hexene interpolymer is 9 weight percent ethylene and 1 weight percent 1-hexene, and has a Mw of 250,000, then a comparable polymer would have from 8.1 to 9.9 weight percent ethylene, from 0.9 to 1.1 weight percent 1-hexene, and a Mw from 225,000 to 275,000, and prepared with a Ziegler-Natta catalyst.

In one embodiment, a propylene-based interpolymer is characterized as having substantially isotactic propylene sequences. "Substantially isotactic propylene sequences," and similar terms, mean that the sequences have an isotactic triad (mm) measured by 13C NMR of greater than about 0.85, preferably greater than about 0.90, more preferably greater than about 0.92, and most preferably greater than about 0.93. Isotactic triads are well known in the art, and are described in, for example, U.S. Patent 5,504,172, and International Publication No. WO 00/01745, which refers to the isotactic sequence in terms of a triad unit in the copolymer molecular chain determined by 13C NMR spectra.

In one embodiment, the propylene-based interpolymer comprises (A) at least 60 weight percent (wt%) units derived from propylene, and (B) between greater than zero and 40 wt% units derived from ethylene, the propylene interpolymer further characterized by at least one of the following properties: (1) a g' ratio of less than 1, preferably less than 0.95, more preferably less than 0.85 and even more preferably less than 0.80, measured at interpolymer number average molecular weight (Mn), (2) a relative compositional drift of less than 50%, and (3) propylene chain segments having a chain isotacticity triad index of at least 70 mole percent. In another embodiment, the isotactic propylene interpolymer is characterized by at least two of properties (1), (2) and (3) and in another embodiment, the isotactic propylene interpolymer is characterized by properties (1), (2) and (3).

In one embodiment, the propylene-based interpolymers are characterized at least one of (4) an intrinsic viscosity is less than 0.35 at a $\log_{10}$ weight average molecular weight of 5.5, and (5) a degree of strain hardening of between greater than 1.2 and 20. In one embodiment, the isotactic propylene interpolymers are characterized by both (4) and (5).

In one embodiment, the propylene-based interpolymers are further characterized by at least one of the following properties:

(a) A weight average molecular weight (Mw) of at least 50,000 grams per mole (g/mol);
(b) An Mw/Mn of less than 4;
(c) A critical shear rate at the onset of surface melt fracture (OSMF) of at least 4,000 sec$^{-1}$;
(e) An $I_{10}/I_2$ at 230°C greater than or equal to ($\geq$) 5.63;
(f) A nominal weight percent crystallinity from greater than 0 to 40 wt%; and, preferably,
(g) A single melting point as measured by differential scanning calorimetry (DSC).

A propylene-based interpolymer may be prepared by polymerizing propylene and at least one of ethylene and a $C_{4-30}$ $\alpha$-olefin under continuous solution polymerization conditions in the presence of a catalyst composition comprising a hafnium complex of a polyvalent aryloxyether. The catalyst includes an activating cocatalyst, and the polymerization conditions typically include a temperature from 120 to 250°C and a pressure from 100 kPa to 300 MPa. These propylene-based interpolymers are further described in U.S. Provisional Application No. 60/988,999, filed on November, 2007 (now International Application No. PCT/US08/082599, filed on November 6, 2008.)

A propylene-based polymer may comprise a combination of two or more embodiments as described herein.

Ethylene-based Polymers

Suitable ethylene-base polymers for use in the coated substrates of the invention include, but are not limited to, high density polyethylene (HDPE), linear low density polyethylene (LLDPE), ultra low density polyethylene (ULDPE), homogeneously branched linear ethylene polymers, and homogeneously branched substantially linear ethylene polymers (that is homogeneously branched long chain branched ethylene polymers).

High density polyethylene (HDPE), useful as a polyolefin resin, typically has a density of about 0.94 to about 0.97 g/cc. Commercial examples of HDPE are readily available in the market. Other suitable ethylene polymers include low density polyethylene (LDPE), linear low density polyethylene (LLDPE), and linear very low density polyethylene (VLDPE). Typically the low density polyethylene (LDPE) is made under high-pressure, using free-radical polymerization conditions. Low density polyethylene typically has a density from 0.91 to 0.94 g/cc.

Linear low density polyethylene (LLDPE) is characterized by little, if any, long chain branching, in contrast to conventional LDPE. The processes for producing LLDPE are well known in the art and commercial grades of this polyolefin resin are available. Generally, LLDPE is produced in gas-phase fluidized bed reactors or liquid phase solution process reactors, using a Ziegler-Natta catalyst system.

The linear low density polyethylene (LLDPE), ultra low density polyethylene (ULDPE), homogeneously branched linear ethylene interpolymers, or homogeneously branched substantially linear ethylene interpolymers, typically have polymerized therein at least one $\alpha$-olefin. The term "interpolymer" used herein indicates the polymer can be a copolymer, a terpolymer or any polymer having more than one polymerized monomer. Monomers usefully copolymerized with ethylene to make the interpolymer include the C3-C20 $\alpha$-olefins, and especially propylene, 1-butene, 1-pentene, 1-hexene, 4- methyl-1-pentene, 1-heptene and 1-octene. Especially preferred comonomers include propylene, 1-butene, 1-hexene and 1-octene.

Commercial examples of suitable ethylene-base interpolymers include ATTANE, AFFINITY, DOWLEX, ELITE, all available from The Dow Chemical Company; and EXCEED and EXACT available from Exxon Chemical Company.

In one embodiment, an ethylene-based polymer has a melt index, 12, less than, or equal to, 1000 g/10 min, preferably less than, or equal to, 500 g/10 min, more preferably less than, or equal to, 100 g/10 min, most preferably less than, or equal to, 50 g/10 min, as measured in accordance with ASTM 1238, Condition 190°C/2.16 kg.

The terms "homogeneous" and "homogeneously-branched" are used in reference to an ethylene/a-olefin in-terpolymer, in which the $\alpha$-olefin comonomer is randomly distributed within a given polymer molecule, and substantially all of the polymer molecules have the same ethylene-to-comonomer ratio. The homogeneously branched ethylene interpolymers that can be used in the practice of this invention include linear ethylene interpolymers, and substantially linear ethylene interpolymers. Included amongst the homogeneously branched linear ethylene interpolymers are ethylene polymers, which lack long chain branching (or measurable amounts of), but do have short chain branches, derived from the comonomer polymerized into the interpolymer, and which are homogeneously distributed, both within the same polymer chain, and between different polymer chains. That is, homogeneously branched linear ethylene interpolymers lack long chain branching, just as is the case for the linear low density polyethylene polymers or linear high density polyethylene polymers, made using uniform branching distribution polymerization processes, as described, for example, by Elston in U.S. Patent 3,645,992. Commercial examples of homogeneously branched linear ethylene/$\alpha$-olefin inter-polymers include TAFMER polymers supplied by the Mitsui Chemical Company and EXACT polymers supplied by ExxonMobil Chemical Company.

The substantially linear ethylene interpolymers used in the present invention are described in U.S. Patent Nos. 5,272,236; 5,278,272; 6,054,544; 6,335,410 and 6,723,810. The substantially linear ethylene interpolymers are those in which the comonomer is randomly distributed within a given interpolymer molecule, and in which substantially all of the interpolymer molecules have the same ethylene/comonomer ratio within that interpolymer. In addition, the substantially linear ethylene interpolymers are homogeneously branched ethylene interpolymers having long chain branching. The long chain branches have the same comonomer distribution as the polymer backbone, and can have about the same length as the length of the polymer backbone. "Substantially linear," typically, is in reference to a polymer that is substituted, on average, with 0.01 long chain branches per 1000 carbons to 3 long chain branches per 1000 carbons. The length of a long chain branch is longer than the carbon length of a short chain branch formed from the incorporation of one comonomer into the polymer backbone.

Some polymers may be substituted with 0.01 long chain branches per 1000 carbons to 1 long chain branch per 1000 carbons, or from 0.05 long chain branches per 1000 carbons to 1 long chain branch per 1000 carbons, or from 0.3 long chain branches per 1000 carbons to 1 long chain branch per 1000 carbons. Commercial examples of substantially linear polymers include the ENGAGE polymers and AFFINITY polymers (both available from The Dow Chemical Company).

The substantially linear ethylene interpolymers form a unique class of homogeneously branched ethylene polymers. They differ substantially from the well-known class of conventional, homogeneously branched linear ethylene interpolymers, described by Elston in U.S. Patent 3,645,992, and, moreover, they are not in the same class as conventional heterogeneous Ziegler-Natta catalyst polymerized linear ethylene polymers (for example, ultra low density polyethylene (ULDPE), linear low density polyethylene (LLDPE) or high density polyethylene (HDPE) made, for example, using the technique disclosed by Anderson et al. in U.S. Patent 4,076,698); nor are they in the same class as high pressure, free-radical initiated, highly branched polyethylenes, such as, for example, low density polyethylene (LDPE), ethylene-acrylic acid (EAA) copolymers and ethylene vinyl acetate (EVA) copolymers.

The homogeneously branched, substantially linear ethylene interpolymers useful in the invention have excellent processability, even though they have a relatively narrow molecular weight distribution. Surprisingly, the melt flow ratio (110/12), according to ASTM D 1238, of the substantially linear ethylene interpolymers can be varied widely, and essentially independently of the molecular weight distribution ($M_w/M_n$ or MWD). This surprising behavior is completely contrary to conventional homogeneously branched linear ethylene interpolymers, such as those described, for example, by Elston in U.S. 3,645,992, and heterogeneously branched conventional Ziegler-Natta polymerized linear polyethylene interpolymers, such as those described, for example, by Anderson et al., in U.S. 4,076,698. Unlike substantially linear ethylene interpolymers, linear ethylene interpolymers (whether homogeneously or heterogeneously branched) have rheological properties, such that, as the molecular weight distribution increases, the 110/12 value also increases. "Long chain branching (LCB)" can be determined by conventional techniques known in the industry, such as 13C nuclear magnetic resonance (13C NMR) spectroscopy, using, for example, the method of Randall (Rev. Micromole. Chem. Phys., 1989, C29 (2&3), p. 285-297). Two other methods are gel permeation chromatography, coupled with a low angle laser light scattering detector (GPC-LALLS), and gel permeation chromatography, coupled with a differential viscometer detector (GPC-DV). The use of these techniques for long chain branch detection, and the underlying theories, have been well documented in the literature. See, for example, Zimm, B.H. and Stockmayer, W.H., J. Chem. Phys.,17,1301(1949) and Rudin, A., Modern Methods of Polymer Characterization, John Wiley & Sons, New York (1991) pp. 103-112. In contrast to "substantially linear ethylene polymer," "linear ethylene polymer" means that the polymer lacks measurable or demonstrable long chain branches, that is, the polymer is substituted with an average of less than 0.01 long chain branch per 1000 carbons.

The homogeneous branched ethylene polymers useful in the present invention will preferably have a single melting peak, as measured using differential scanning calorimetry (DSC), in contrast to heterogeneously branched linear ethylene polymers, which have 2 or more melting peaks, due to the heterogeneously branched polymer's broad branching distribution.

Homogeneously branched linear ethylene interpolymers are a known class of polymers which have a linear polymer backbone, no measurable long chain branching and a narrow molecular weight distribution. Such polymers are interpolymers of ethylene and at least one $\alpha$-olefin comonomer of from 3 to 20 carbon atoms, and are preferably copolymers of ethylene with a C3-C20 a-olefin, and are more preferably copolymers of ethylene with propylene, 1-butene, 1-pentene, 1-hexene, 1-heptene or 1-octene, and even more preferably, propylene, 1-butene, 1-hexene or 1-octene. This class of polymers is disclosed for example, by Elston in US Patent No. 3,645,992, and subsequent processes to produce such polymers using metallocene catalysts have been developed, as shown, for example, in EP 0 129 368, EP 0 260 999, US Patent No. 4,701,432; US Patent No. 4,937,301; US Patent No. 4,935,397; US Patent No. 5,055,438; and WO 90/07526, and others. The polymers can be made by conventional polymerization processes (for example, gas phase, slurry, solution, and high pressure).

In one embodiment, the ethylene-based polymer has a molecular weight distribution ($M_w/M_n$) less than, or equal to, 10, and preferably less than, or equal to, 5. In a further embodiment, the ethylene-based polymer is an the ethylene/$\alpha$-olefin interpolymer. In another embodiment, an ethylene-based polymer has a molecular weight distribution from 1.1 to 5, and more preferably from about 1.5 to 4. In a further embodiment, the ethylene-based polymer is an the ethylene/$\alpha$-olefin interpolymer. All individual values and subranges from about 1 to 5 are included herein and disclosed herein.

Comonomers include, but are not limited to, propylene, isobutylene, 1-butene, 1-pentene, 1-hexene, 3-methyl-1-pentene, 4-methyl-1-pentene, and 1-octene, nonconjugated dienes, polyenes, butadienes, isoprenes, pentadienes, hexadienes (for example, 1,4-hexadiene), octadienes, styrene, halo-substituted styrene, alkylsubstituted styrene, tetrafluoroethylenes, vinylbenzocyclobutene, naphthenics, cycloalkenes (for example, cyclopentene, cyclohexene, cyclooctene), and mixtures thereof. Typically and preferably, the ethylene is copolymerized with one C3-C20 $\alpha$-olefin. Preferred comonomers include propene, 1-butene, 1-pentene, 1-hexene, 1-heptene and 1-octene, and more preferably include propene, 1-butene, 1-hexene and 1-octene.

Illustrative $\alpha$-olefins include propylene, 1-butene, 1-pentene, 1-hexene, 4-methyl-1-pentene, 1-heptene, 1-octene, 1-nonene and 1-decene. The $\alpha$-olefin is desirably a C3-C10 $\alpha$-olefin. Preferably, the $\alpha$-olefin is propylene, 1-butene, 1-hexene or 1-octene. Illustrative interpolymers include ethylene/propylene (EP) copolymers, ethylene/butene (EB) copolymers, ethylene/hexene (EH) copolymers, ethylene/octene (EO) copolymers, ethylene/$\alpha$-olefin/diene modified (EAODM) interpolymers, such as ethylene/propylene/diene modified (EPDM) interpolymers and ethylene/propylene/octene terpolymers. Preferred copolymers include EP, EB, EH and EO polymers.

Suitable diene and triene comonomers include 7-methyl-1,6-octadiene; 3,7-dimethyl-1, 6-octadiene; 5,7- dimethyl-1,6-octadiene; 3,7,11-trimethyl-1,6,10-octatriene; 6-methyl-1,5heptadiene; 1,3-butadiene; 1,6-heptadiene; 1,7-octadiene; 1,8-nonadiene; 1,9-decadiene; 1,10-undecadiene; norbornene; tetracyclododecene; or mixtures thereof; and preferably butadiene; hexadienes; and octadienes; and most preferably 1,4-hexadiene; 1,9-decadiene; 4-methyl-1,4-hexadiene; 5-methyl-1,4-hexadiene; dicyclopentadiene; and 5-ethylidene-2-norbornene (ENB).

Additional unsaturated comonomers include 1,3-butadiene, 1,3-pentadiene, norbornadiene, and dicyclopentadiene; C8-40 vinyl aromatic compounds including sytrene, o-, m-, and p-methylstyrene, divinylbenzene, vinylbiphenyl, vinylnapthalene; and halogen-substituted C8-40 vinyl aromatic compounds such as chlorostyrene and fluorostyrene.

In one embodiment, the ethylene-based polymer has a melt index (12) from 0.01 g/10 min to 1000 g/10 min, preferably from 0.01 g/10 min to 500 g/10 min, and more preferably from 0.01 g/10 min to 100 g/10 min, as determined using ASTM D-1238 (190°C, 2.16 kg load). All individual values and subranges from 0.01 g/10 min to 1000 g/10 min are includes herein and disclosed herein. In a further embodiment, the ethylene-based polymer is an the ethylene/$\alpha$-olefin interpolymer.

In one embodiment, the ethylene-based polymer has a percent crystallinity of less than, or equal to, 60 percent, preferably less than, or equal to, 50 percent, and more preferably less than, or equal to, 40 percent, as measured by DSC. Preferably, these polymers have a percent crystallinity from 2 percent to 60 percent, including all individual values and subranges from 2 percent to 60 percent. Such individual values and subranges are disclosed herein. In a further embodiment, the ethylene-based polymer is an the ethylene/$\alpha$-olefin interpolymer,

In one embodiment, the ethylene-based polymer has a density less than, or equal to, 0.94 g/cc, preferably less than, or equal to, 0.93 g/cc, and more preferably less than, or equal to, 0.92 g/cc. In another embodiment, the ethylene-based polymer has a density greater than, or equal to, 0.86 g/cc, preferably greater than, or equal to, 0.87 g/cc, and more preferably greater than, or equal to, 0.88 g/cc. In a further embodiment, the ethylene-based polymer is an the ethylene/$\alpha$-olefin interpolymer.

In one embodiment, the ethylene-based polymer has a density from 0.86 g/cc to 0.94 g/cc, and preferably from 0.87 g/cc to 0.93 g/cc, and more preferably from 0.88 g/cc to 0.92 g/cc. All individual values and subranges from 0.85 g/cc to 0.93 g/cc are included herein and disclosed herein. In a further embodiment, the ethylene-based polymer is an the ethylene/$\alpha$-olefin interpolymer.

Other ethylene-based polymers include ethylene acrylic acid copolymers (EAA); ethylene acrylate copolymers (such as ethylene butyl- acrylate copolymers, ethylene ethyl- acrylate copolymers and ethylene methyl-acrylate copolymers (EBAs, EEAs and EMAs)); ethylene/butyl acrylate/carbon monoxide (EnBACO); ethylene ethylacrylate polymers (EEA) as well as functionally modified ethylene-based polymers, such as silane-grafted ethylene-based polymer or maleic anhydride grafted ethylene-based polymer; ethylene/butyl acrylate/glycidyl methyacrylate (EnBAGMA); ethylene methacrylic acid (E/MAA); ethylene vinyl alcohol; or combinations of two or more of these polymers.

In one embodiment, the ethylene-based polymer is a highly branched polymer comprising units derived from ethylene, and an acrylic acid or an acrylate. In a further embodiment, the comonomer is derived from an acrylate, and the acrylate is selected from ethylacrylate, methylacrylate or butylacrylate. In yet another embodiment, the comonomer is derived from acrylic acid. In a further embodiment, the acrylic acid is present in an amount greater than, or equal to, 5 weight percent, preferably greater than, or equal to, 6 weight percent, and more preferably greater than, or equal to, 8 weight percent, base on the total weight of polymerizable monomers. In one embodiment, the ethylene-based polymer is a high pressure, free-radical initiated, highly branched ethylene-based polymer, such as, ethylene-acrylic acid (EAA) copolymers,

In one embodiment, the ethylene-based polymer comprises units derived from ethylene and an anhydride, and preferably maleic anhydride. In a further embodiment, the units derived from the anhydride, preferably maleic anhydride, are present in an amount greater than, or equal to, 0.5 weight percent, preferably greater than, or equal to 1.0 weight percent, based on the total weight of the functionalized polymer.

In one embodiment, the ethylene-based polymer is selected from the group consisting of polyethylene acrylic acid copolymer, an anhydride grafted polyethylene, ethylene butylacrylate, ethylene glycidyl methacrylate, ethylene methacrylic acid, ethylene vinyl alcohol, and combinations thereof.

In one embodiment, the ethylene-based polymer is selected from the group consisting of polyethylene acrylic acid copolymer, an anhydride grafted polyethylene, ethylene butylacrylate, ethylene glycidyl methacrylate, ethylene methacrylic acid, and combinations thereof.

Additional commercial ethylene-based polymers include PRIMACOR, AMPLIFY EA and AMPLIFY GR polymers available from The Dow Chemical Company; and other commercial polymers, such as the following ionomeric polymers: SURLYN, IOTEK, LOTADER, NUCREL, BYNEL, PLEXAR, TYMOR, and ELVALOY (DuPont).

In one embodiment, the ethylene-based polymers have a melt index as described above.

In one embodiment, the ethylene-based polymers have a density as described above.

An ethylene-based polymer may comprise a combination of two or more embodiments as described herein.

Olefin Multi-Block Interpolymer

Olefin multi-block interpolymers may be used in the coated substrates of the invention. Olefin multi-block interpolymers may be made with two catalysts incorporating differing quantities of comonomer and a chain shuttling agent. Preferred olefin multi-block interpolymers are the ethylene/$\alpha$-olefin multi-block interpolymers. An ethylene/$\alpha$-olefin multi-block interpolymer has one or more of the following characteristics:

(1) an average block index greater than zero and up to about 1.0 and a molecular weight distribution, Mw/Mn, greater than about 1.3; or

(2) at least one molecular fraction which elutes between 40°C and 130°C when fractionated using TREF, characterized in that the fraction has a block index of at least 0.5 and up to about 1; or

(3) an Mw/Mn from about 1.7 to about 3.5, at least one melting point, Tm, in degrees Celsius, and a density, d, in grams/cubic centimeter, wherein the numerical values of $T_m$ and d correspond to the relationship:

$$T_m > -6553.3 + 13735(d) - 7051.7(d)^2;$$

or

(4) an Mw/Mn from about 1.7 to about 3.5, and is characterized by a heat of fusion, ΔH in J/g, and a delta quantity, ΔT, in degrees Celsius defined as the temperature difference between the tallest DSC peak and the tallest CRYSTAF peak, wherein the numerical values of ΔT and ΔH have the following relationships:

ΔT > -0.1299(ΔH) + 62.81 for ΔH greater than zero and up to 130 J/g,

ΔT ≥ 48°C for ΔH greater than 130 J/g ,

wherein the CRYSTAF peak is determined using at least 5 percent of the cumulative polymer, and if less than 5 percent of the polymer has an identifiable CRYSTAF peak, then the CRYSTAF temperature is 30°C; or

(5) an elastic recovery, Re, in percent at 300 percent strain and 1 cycle measured with a compression-molded coated substrate of the ethylene/α-olefin interpolymer, and has a density, d, in grams/cubic centimeter, wherein the numerical values of Re and d satisfy the following relationship when ethylene/α-olefin interpolymer is substantially free of a cross-linked phase: Re >1481-1629(d); or

(6) a molecular fraction which elutes between 40°C and 130°C when fractionated using TREF, characterized in that the fraction has a molar comonomer content of at least 5 percent higher than that of a comparable random ethylene interpolymer fraction eluting between the same temperatures, wherein said comparable random ethylene interpolymer has the same comonomer(s) and has a melt index, density, and molar comonomer content (based on the whole polymer) within 10 percent of that of the ethylene/α-olefin interpolymer; or

(7) a storage modulus at 25 °C, G'(25 °C), and a storage modulus at 100 °C, G'(100 °C), wherein the ratio of G'(25 °C) to G'(100 °C) is in the range of about 1:1 to about 9:1.

In a further embodiment, the ethylene/α-olefin interpolymers are ethylene/ α-olefin copolymers made in a continuous, solution polymerization reactor, and which possess a most probable distribution of block lengths. In one embodiment, the copolymers contain 4 or more blocks or segments including terminal blocks.
The ethylene/α-olefin multi-block interpolymers typically comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers, In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, the As and Bs are linked in a substantially linear fashion, as opposed to a substantially branched or substantially star-shaped fashion. In other embodiments, A blocks and B blocks are randomly distributed along the polymer chain. In other words, the block copolymers usually do not have a structure as follows.
AAA-AA-BBB-BB
In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The ethylene multi-block polymers typically comprise various amounts of "hard" and "soft" segments. "Hard" segments refer to blocks of polymerized units in which ethylene is present in an amount greater than about 95 weight percent, and preferably greater than about 98 weight percent based on the weight of the polymer. In other words, the comonomer content (content of monomers other than ethylene) in the hard segments is less than about 5 weight percent, and preferably less than about 2 weight percent based on the weight of the polymer. In some embodiments, the hard segments comprise all or substantially all ethylene. "Soft" segments, on the other hand, refer to blocks of polymerized units in which the comonomer content (content of monomers other than ethylene) is greater than about 5 weight percent, preferably greater than about 8 weight percent, greater than about 10 weight percent, or greater than about 15 weight percent based on the weight of the polymer. In some embodiments, the comonomer content in the soft segments can be greater than about 20 weight percent, greater than about 25 weight percent, greater than about 30 weight percent, greater than about 35 weight percent, greater than about 40 weight percent, greater than about 45 weight percent, greater than about 50 weight percent, or greater than about 60 weight percent.

The soft segments can often be present in a block interpolymer from about 1 weight percent to about 99 weight percent of the total weight of the block interpolymer, preferably from about 5 weight percent to about 95 weight percent, from about 10 weight percent to about 90 weight percent, from about 15 weight percent to about 85 weight percent, from about 20 weight percent to about 80 weight percent, from about 25 weight percent to about 75 weight percent, from about 30 weight percent to about 70 weight percent, from about 35 weight percent to about 65 weight percent, from about 40 weight percent to about 60 weight percent, or from about 45 weight percent to about 55 weight percent of the total weight of the block interpolymer. Conversely, the hard segments can be present in similar ranges. The soft segment weight percentage and the hard segment weight percentage can be calculated based on data obtained from DSC or NMR. Such methods and calculations are disclosed in a concurrently filed U.S. Patent Application Serial No. 11/376,835 (insert when known), Attorney Docket No. 385063-999558, entitled "Ethylene/$\alpha$-Olefin Block Interpolymers", filed on March 15, 2006, in the name of Colin L.P. Shan, Lonnie Hazlitt, et. al. and assigned to Dow Global Technologies Inc.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount of branching, including long chain branching or hyper-branching, the homogeneity, or any other chemical or physical property. The multi-block copolymers are characterized by unique distributions of both polydispersity index (PDI or $M_w/M_n$), block length distribution, and/or block number distribution due to the unique process making of the copolymers. More specifically, when produced in a continuous process, the polymers desirably possess PDI from 1.7 to 2.9, preferably from 1.8 to 2.5, more preferably from 1.8 to 2.2, and most preferably from 1.8 to 2.1. When produced in a batch or semi-batch process, the polymers possess PDI from 1.0 to 2.9, preferably from 1.3 to 2.5, more preferably from 1.4 to 2.0, and most preferably from 1.4 to 1.8.

In one embodiment, an ethylene/$\alpha$-olefin multi-block interpolymer has an ethylene content of from 60 to 90 percent, a diene content of from 0 to 10 percent, and an $\alpha$-olefin content of from 10 to 40 percent, based on the total weight of the polymer. In one embodiment, such polymers are high molecular weight polymers, having a weight average molecular weight ($M_w$) from 10,000 to about 2,500,000, preferably from 20,000 to 500,000, more preferably from 20,000 to 350,000; a polydispersity less than 3.5, more preferably less than 3 and as low as about 2; and a Mooney viscosity (ML (1+4) at 125°C) from 1 to 250.

In one embodiment, the ethylene multi-block interpolymers have a density of less than about 0.90, preferably less than about 0.89, more preferably less than about 0.885, even more preferably less than about 0.88 and even more preferably less than about 0.875, g/cc. In one embodiment, the ethylene multi-block interpolymers have a density greater than about 0.85, and more preferably greater than about 0.86, g/cc. Density is measured by the procedure of ASTM D-792-00. Low density ethylene multi-block copolymers are generally characterized as amorphous, flexible, and have good optical properties, for example, high transmission of visible and UV-light and low haze.

In one embodiment, the ethylene multi-block interpolymers have a melting point of less than about 125°C. The melting point is measured by the differential scanning calorimetry (DSC) method described in U.S. Publication 2006/0199930 (WO 2005/090427).

The ethylene multi-block interpolymers and their preparation and use, are more fully described in WO 2005/090427, US2006/0199931, US2006/0199930, US2006/0199914, US2006/0199912, US2006/0199911, US2006/0199910, US2006/0199908, US2006/0199907, US2006/0199906, US2006/0199905, US2006/0199897, US2006/0199896, US2006/0199887, US2006/0199884, US2006/0199872, US2006/0199744, US2006/0199030, US2006/0199006 and US2006/0199983.

An olefin multi-block interpolymer may comprise a combination of two or more embodiments as described herein.

An ethylene multi-block interpolymer may comprise a combination of two or more embodiments as described

herein.

<u>Webs</u>

Suitable webs for use in the coated substrates of the invention include woven webs, nonwoven webs, and combinations thereof.

In one embodiment, the web is formed from a composition comprising a propylene-based polymer. In a further embodiment, the propylene-based polymer is a polypropylene homopolymer.

In one embodiment, the web is formed from a composition comprising a ethylene-based polymer.

In one embodiment, the web has a thickness of 5 microns or more.

Examples of woven webs and/or nonwoven webs are described in U.S. Patent 5,845,995; U.S. Publication No. 2007/0178784; and German Application DE3236770A1.

A web may comprise a combination of two or more embodiments as described herein.

<u>Some Example Coated Substrates</u>

The coated substrate comprises a first layer, a second layer and a web, and wherein the second layer is located in-between the first layer and the web. In a further embodiment, first layer is formed from one of three compositions: A, B, or C. In a further embodiment, the second layer is formed from one of five compositions: D, E, F, G, or H. In a further embodiment, the web is formed from a composition comprising greater than 50, preferably greater than 70, and more preferably greater than 90 weight percent (based on the total weight of the composition) of a propylene-based polymer. In a further embodiment, coated substrate consists of only the first layer, the second layer and the web. Density, melt index and melt flow rate are each measured as described herein.

Composition A comprises a random polypropylene with a density from 0.88 to 0.92 g/mole, and melt flow rate from 30 to 50 g/10 min, preferably from 35 to 45 g/10 min, and a LDPE with a density from 0.91 to 0.92 g/mole, and melt index from 3 to 5 g/10 min.

Composition B comprises a bimodal ethylene/$\alpha$-olefin interpolymer with a density from 0.91 to 0.93 g/mole, and melt index from 6 to 10 g/10 min, preferably from 7.5 to 8.5 g/10 min. In a further embodiment, the $\alpha$-olefin is selected from propylene, 1-butene, 1-hexene, or 1-octene, and preferably 1-butene, 1-hexene, or 1-octene, and more preferably 1-octene.

Composition C comprises a LDPE with a density from 0.91 to 0.93 g/mole, and melt index from 5 to 9 g/10 min, preferably from 6.5 to 8.5 g/10 min.

Composition D comprises a propylene/ethylene interpolymer, preferably a propylene/ethylene copolymer, with a density from 0.86 to 0.89 g/mole, and melt flow rate from 6 to 10 g/10 min, preferably from 7.5 to 8.5 g/10 min.

Composition E comprises a propylene/ethylene interpolymer with a density from 0.855 to 0.885 g/mole, and melt flow rate from 6 to 10 g/10 min, preferably from 7.5 to 8.5 g/10 min.

Composition F comprises a propylene/ethylene interpolymer, preferably a propylene/ethylene copolymer, with a density from 0.86 to 0.89 g/mole, and melt flow rate from 15 to 35 g/10 min, preferably from 20 to 30 g/10 min.

Composition G comprises an ethylene/1-octene interpolymer with a density from 0.86 to 0.89 g/mole, and melt index from 3 to 8 g/10 min, preferably from 4 to 6 g/10 min.

Composition H comprises an ethylene-ethyl acrylate interpolymer with a density from 0.92 to 0.94 g/mole, and melt index from 15 to 30 g/10 min, preferably from 18 to 24 g/10 min.

In one embodiment, the coated substrate does not comprise a paper layer.

In one embodiment, the coated substrate does not comprise a zeolite.

In one embodiment, the composition used to form each layer of the coated substrate comprises greater than 50 weight percent, preferably greater than 70 weight percent, and more preferably greater than 90 weight percent of a propylene-based polymer or an ethylene-based polymer.

In one embodiment, the composition used to form the first layer of the coated substrate comprises greater than 50 weight percent, preferably greater than 70 weight percent, and more preferably greater than 90 weight percent of a propylene-based polymer.

In one embodiment, the composition used to form the first layer of the coated substrate comprises greater than 50 weight percent, preferably greater than 70 weight percent, and more preferably greater than 90 weight percent of an ethylene-based polymer.

In one embodiment, the composition used to form the second layer of the coated substrate comprises greater than 50 weight percent, preferably greater than 70 weight percent, and more preferably greater than 90 weight percent of a propylene-based polymer.

In one embodiment, the composition used to form the second layer of the coated substrate comprises greater than 50 weight percent, preferably greater than 70 weight percent, and more preferably greater than 90 weight percent of an ethylene-based polymer.

In one embodiment, the composition used to form the first layer of the coated substrate comprises greater than 50 weight percent, preferably greater than 70 weight percent, and more preferably greater than 90 weight percent of a propylene-based polymer, and the composition used to form the second layer of the coated substrate comprises greater than 50 weight percent, preferably greater than 70 weight percent, and more preferably greater than 90 weight percent of a propylene-based polymer.

In one embodiment, the composition used to form the first layer of the coated substrate comprises greater than 50 weight percent, preferably greater than 70 weight percent, and more preferably greater than 90 weight percent of a propylene-based polymer, and the composition used to form the second layer of the coated substrate comprises greater than 50 weight percent, preferably greater than 70 weight percent, and more preferably greater than 90 weight percent of an ethylene-based polymer.

In one embodiment, the composition used to form the first layer of the coated substrate comprises greater than 50 weight percent, preferably greater than 70 weight percent, and more preferably greater than 90 weight percent of an ethylene-based polymer, and the composition used to form the second layer of the coated substrate comprises greater than 50 weight percent, preferably greater than 70 weight percent, and more preferably greater than 90 weight percent of a propylene-based polymer.

In one embodiment, the composition used to form the first layer of the coated substrate comprises greater than 50 weight percent, preferably greater than 70 weight percent, and more preferably greater than 90 weight percent of an ethylene-based polymer, and the composition used to form the second layer of the coated substrate comprises greater than 50 weight percent, preferably greater than 70 weight percent, and more preferably greater than 90 weight percent of an ethylene-based polymer.

As discussed above, a coated substrate may comprise a combination of two or more embodiments as described herein.

Some examples of suitable polymers for use in the coated substrates of the invention are show in Table 1 below.

TABLE 1: Example Polymers

| | Polymer | Type | Melt Flow Rate (g/10min@230°C, 2,16kg) ASTM 1238-04 | Density (g/cc) ASTM D792-00 |
|---|---|---|---|---|
| A | rPP | Random Polypropylene | 30-50 | 0.88-0.92 |
| | Polymer | Type | Melt Flow Rate (g/10min@230°C, 2,16kg) ASTM 1238-04 | Density (g/cc) ASTM D792-00 |
| D | PE1 | Propylene/Ethylene Copolymer | 15-20 | 0.86-0.88 |
| E | PE2 | Propylene/Ethylene Copolymer | 6-10 | 0.865-0.885 |
| F | PE3 | Propylene/Ethylene Copolymer | 6-10 | 0.865-0.885 |
| | Polymer | Type | Melt Index (g/10min@190°C, 2,16kg) ASTM 1238-04 | Density (g/cc) ASTM D792-00 |
| | LDPE -1 | Polyethylene Homopolymer | 3-5 | 0.91-0.92 |
| C | LDPE -2 | Polyethylene Homopolymer | 5-9 | 0.91-0.93 |
| B | EAO1 | Ethylene/Octene Copolymer (Bimodal) | 6-10 | 0.91-0.93 |
| G | EAO2 | Ethylene/Octene Copolymer | 4-6 or 14-22 | 0.86-0.88 |
| H | EEA 1 | Ethylene/Ethyl Acrylate Copolymer | 18 -24 or 10-14 | 0.92-0.94 |

The following coated substrate combinations, as shown in Table 2 below, each formed using a web formed from a composition comprising a propylene-based polymer are believed to be particularly suitable for use in the invention.

TABLE 2: Examples of Coated Substrates

| First Layer* | Second Layer |
|---|---|
| 80 wt% rPP and 20 wt% LDPE 1 (wt % based on sum weight of rPP and LDPE 1) | PE1, or PE2, or PE3 |

(continued)

| First Layer* | Second Layer |
| --- | --- |
| 80 wt% rPP and 20 wt% LDPE 1 (wt % based on sum weight of rPP and LDPE 1) | EAO2 or EEA1 |
| LDPE 2 | PE1, or PE2, or PE3 |
| LDPE 2 | EAO2 or EEA1 |
| EAO1 | PE1, or PE2, or PE3 |
| EAO1 | EAO2 or EEA1 |
| * For each combination, the first layer can also be (1) a 100 wt% Homo PP or (2) 100 wt% rPP (for example with 5 wt% Et). | |

Process for Forming the Coated Substrates of the Invention

Coated substrate configurations may be formed using an extrusion coating process, by either co-extrusion, requiring polymers selection in accordance to coextrusion technique used, or by an extrusion lamination process, which permits a combination of web based materials and a single or multilayered molten extrusion coating to form a laminate composed of substrate web and a laminated coating.

The integrity of the coating is largely a matter of bonding the layers together. Extrusion coating and extrusion lamination processes may use corona treatment, flame treatment or plasma treatment as pre-treatments of web based materials (substrate and/or lamination web) or ozone treatment of the molten coating web to enhance interlayer adhesion to the coated polymer.

Adhesive or hot melt lamination of web based materials or multi-layered application of polyolefin dispersions applied by means of a curtain coating may be an alternative technique in place of co-extrusion coating or extrusion lamination, as a whole, or as a priming alternative for co-extrusion or extrusion laminations.

In general, a coated substrate of the invention can be prepared by selecting the thermoplastic polymers suitable for making each layer, forming a coated substrate of each layer, and bonding the layers, or coextruding or casting one or more layers. The final coated substrate is perforated to form a breathable coated substrate. Desirably, the coated substrate layers are bonded continuously over the interfacial area between layers.

For each layer, typically, it is suitable to extrusion blend the components and any additional additives, such as slip, anti-block, and polymer processing aids. The extrusion blending should be carried out in a manner, such that an adequate degree of dispersion is achieved. The parameters of extrusion blending will necessarily vary, depending upon the components. However, typically the total polymer deformation, that is, mixing degree, is important, and is controlled by, for example, the screw-design and the melt temperature. The melt temperature during the formation of the coated substrate forming will depend on its components.

In the case of sacks formed from propylene-based polymers, extrusion coating of a propylene-based polymer formulation is applied over a woven and/or nonwoven web prior to bag formation, resulting in a coated fabric that has a barrier to moisture. As a way to improve permeability during sack fabrication, perforations are made on the coated substrate. This enables the resulting sack to be filled at high speeds. Coextrusion coating or extrusion lamination provides a coated substrate of at least two coating layers, and where the layer in contact with woven and/or nonwoven web has a lower Vicat softening point compared to outer layer. During sack formation, perforations are placed on the fabric, sack is filled, and perforations are later closed by using heat and pressure over the filled sack.

Manufacturing techniques for making structures of the invention include bag stitching, and form-fill-sealing techniques, such as that described in Packaging Machinery Operation, Chapter 8: Form-Fill-Sealing, by C. Glenn Davis (Packaging Machinery Manufacturers Institute, 2000 K Street, N.W., Washington, D.C. 20006); The Wiley Encyclopedia of Packaging Technology, Marilyn Bakker, Editor-in-chief, pp. 364-369 (John Wiley & Sons); U.S. 5,288,531 (Falla et al.), U.S. 5,721,025 (Falla et al.), U.S. 5,360,648 (Falla et al.) and U.S. 6,117,465 (Falla et al.); other manufacturing techniques, such as that discussed in Plastic Coated substrates, Technology and Packaging Applications (Technomic Publishing Co., Inc. (1992)), by Kenton R. Osborn and Wilmer A Jenkens, pp. 39-105. Other manufacturing techniques are disclosed in U.S. 6,723,398 (Chum et al.).

Post processing techniques, such as radiation treatment and corona treatment, especially for printing applications, can also be accomplished with the materials of the invention. The polymer components of the coated substrate may also be silane cured, or the polymers may be grafted post manufacture (such as maleic anhydride grafted polymers, including techniques disclosed in U.S. 4,927,888 (Strait et al.), U.S. 4,950,541 (Tabor et al.), U.S. 4,762,890 (Strait et al.), U.S. 5,346,963 (Hughes et al.), U.S. 4,684,576 (Tabor et al.).

A coated substrate may be perforated using known methods of the art. The shape and size of the perforations, and the amount of perforations will depend on the final use of the coated substrate composition, Perforation mechanisms include, but are not limited to, pinned rollers, plated pins and laser techniques.

Sheets of the coated substrates can be bonded by heat sealing or by use of an adhesive or a stitching process. Heat sealing can be effected using conventional techniques, including, but not limited to, a hot bar, impulse heating, side welding, ultrasonic welding, or other alternative heating mechanisms, as discussed above.

The coated substrates made to any thickness depending upon the application. In one embodiment, the coated substrate has a total thickness of from 20 to 1000 microns, preferably from 20 to 500 microns, more preferably from 20 to 300 microns, and even more preferably from 20 to 250 microns. The permeability may also be adjusted depending upon the application.

Configuration of the Perforations

The configuration of the perforations within a coated substrate will vary, and will depend on the final use of the coated substrate. Sheets of the coated substrate may have perforation in designated areas within the sheet. Designated areas may be of any size and shape. Within these designated areas, the perforation may exist in various configurations, including, but not limited to, perforation size gradients along a particular axis of an area, perforation density gradients along a particular axis of an area, and perforation gradients of different shapes and/or sizes.

In one embodiment, the coated substrate is perforated in a designated area. In another preferred embodiment, the coated substrate is perforated, such that a package, formed from such a coated substrate, contains perforations only within one or more horizontally flat surfaces. In one embodiment, a package contains one or more seams (for example, a seam formed by a heat sealing process or a seam formed by a stitching process). In another embodiment, a package contains two or more seams. The perforations may be localized to a specified area of the package. The perforations may be evenly spaced with the designated area, or the perforations may be at a higher density along the longitudinal midpoint of the designated surface area. In another embodiment, the perforations are aligned in a narrower area, located along the longitudinal midpoint of the surface of the package. In this embodiment, the width of the designated area is considerably less than the width (w) of the container, and preferably less than one-half the width of the container. In each of these embodiments, the size and shape of the perforations may vary. Typically, the sizes of the perforations will increase as the number of perforations decrease.

In one embodiment, the one or more designated areas are located on at least one of the largest faces of the package.

In one embodiment, the perforations are configured such that there is an increase the number of perforations exposed to a maximum compression force exerted by a device, including, but not limited to, vertically positioned rollers.

As discussed above, the invention provides a package prepared from the coated substrate of any of the preceding claims.

In one embodiment, the package has a thickness from 20 microns to 250 microns.

In one embodiment, the package has a capacity from 1 kg to 100 kg.

In one embodiment, the package contains one or more, or two or more seams, and wherein the package contains perforations in one or more designated areas within the surface of the package.

In one embodiment, the perforations are localized in one or more designated areas that experience a maximum in compression force, received from a device that exerts a compression force on the surface of the package.

In one embodiment, the one or more designated areas are located within one or more horizontally flat surfaces of the package.

In one embodiment, the perforations are evenly spaced within the one or more designated areas.

In one embodiment, the one or more designated areas are located on at least one of the largest faces of the package.

A package may comprise a combination of two or more embodiments as described herein.

DEFINITIONS

Any numerical range recited herein, include all values from the lower value to the upper value, in increments of one unit, provided that there is a separation of at least two units between any lower value and any higher value. As an example, if it is stated that the amount of a component, or a value of a compositional or physical property, such as, for example, amount of a blend component, softening temperature, melt index, etc., is between 1 and 100, it is intended that all individual values, such as, 1, 2, 3, etc., and all subranges, such as, 1 to 20, 55 to 70, 197 to 100, etc., are expressly enumerated in this specification. For values which are less than one, one unit is considered to be 0.0001, 0.001, 0.01 or 0.1, as appropriate. These are only examples of what is specifically intended, and all possible combinations of numerical values between the lowest value and the highest value enumerated, are to be considered to be expressly stated in this application. Numerical ranges have been recited, as discussed herein, in reference to Vicat softening point, pore or perforation size, coated substrate thickness, melt index, melt flow rate, density, weight percent of a component, and other properties.

The term "composition," as used herein, includes a mixture of materials which comprise the composition, as well as reaction products and decomposition products formed from the materials of the composition.

The terms "perforations," as used herein, refers to holes made within the coated substrate using an impact mechanism, a laser, or other device. Perforations may be of varying sizes and varying shapes.

The phrase "perforations with a common center," as used herein, refers to the same center of perforations formed in the coated substrate, using the same impact mechanism, laser, or other device, which forms holes through all of the layers of the coated substrate, and also includes minor misalignments of the center of perforations within a layer. It is noted that perforations within the layers of a coated substrate typically remain in place relative to other layers; however, small shifts in the location of one or more perforations within a layer of the coated substrate may occur, which shift the centers of these perforations from their original positions, and destroy the alignment of perforation centers of the layers of the coated substrate. Such shifted centers are also included in the phrase "perforations with a common center."

The term "polymer," as used herein, refers to a polymeric compound prepared by polymerizing monomers, whether of the same or a different type. The generic term polymer thus embraces the term homopolymer, employed to refer to polymers prepared from only one type of monomer, and the term interpolymer as defined hereinafter.

The term "interpolymer," as used herein, refers to polymers prepared by the polymerization of at least two different types of monomers. The generic term interpolymer thus includes copolymers, employed to refer to polymers prepared from two different types of monomers, and polymers prepared from more than two different types of monomers.

The term "thermoplastic polymer" or "thermoplastic composition" and similar terms, mean a polymer or polymer composition that is substantially thermally extrudable or deformable, albeit relatively aggressive conditions may be required.

The terms "blend" or "polymer blend," as used herein, mean a blend of two or more polymers. Such a blend may or may not be miscible (not phase separated at molecular level). Such a blend may or may not be phase separated. Such a blend may or may not contain one or more domain configurations, as determined from transmission electron spectroscopy, light scattering, x-ray scattering, and other methods known in the art.

The term "seal," "sealed" or "sealing," as used herein in reference to perforations in an inner layer, or the second layer, of a coated substrate, refer to the complete or partial closure of a sufficient number of perforations in such a layer to impart to the coated substrate composition an increased moisture barrier and/or water resistance, as compared to the moisture barrier of the same coated substrate composition that does not have such closure.

The term, "ethylene-based polymer," as used herein, refers to a polymer that comprises a majority molar amount of polymerized ethylene monomers (based on the total moles of polymerized monomeric units), and optionally, one or more polymerized comonomers. As used in the context of this disclosure, ethylene-based polymer excludes ethylene multi-block interpolymers.

The term, "propylene-based polymer," as used herein, refers to a polymer that comprises a majority molar amount of polymerized propylene monomers (based on the total moles of polymerized monomeric units), and optionally, one or more polymerized comonomers. As used in the context of this disclosure, propylene-based polymer excludes propylene multi-block interpolymers.

The term, "ethylene/$\alpha$-olefin interpolymer," as used herein, refers to a polymer that comprises a majority molar amount of polymerized ethylene monomers (based on the total moles of polymerized monomeric units), a polymerized $\alpha$-olefin, and optionally, at least one other polymerized comonomer. As used in the context of this disclosure, ethylene/$\alpha$-olefin interpolymer excludes ethylene multi-block interpolymers.

The term, "propylene/$\alpha$-olefin interpolymer," as used herein, refers to a polymer that comprises a majority molar amount of polymerized propylene monomers (based on the total moles of polymerized monomeric units), a polymerized $\alpha$-olefin, and optionally, at least one other polymerized comonomer. As used in the context of this disclosure, propylene/$\alpha$-olefin interpolymer excludes propylene multi-block interpolymers.

The term, "propylene/ethylene interpolymer," as used herein, refers to a polymer that comprises a majority molar amount of polymerized propylene monomers (based on the total moles of polymerized monomeric units), polymerized ethylene, and optionally, at least one other polymerized comonomer. As used in the context of this disclosure, propylene/ethyelene interpolymer excludes propylene multi-block interpolymers.

The term "bimodal" as used herein means that the MWD in a GPC curve exhibits two component polymers wherein one component polymer may even exist as a hump, or shoulder relative to the MWD of the other component polymer.

The terms "comprising", "including", "having" and their derivatives are not intended to exclude the presence of any additional component, step or procedure, whether or not the same is specifically disclosed. In order to avoid any doubt, all compositions claimed through use of the term "comprising" may include any additional additive, adjuvant, or compound whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

TEST PROCEDURES

The specific test parameters within each test will depend on the polymer or polymer blend used. Some of the tests below describe test parameters that are indicated as representative of polyolefin resins. The particular parameters of a test are not intended to limit the scope of this invention. Those skilled in the art will understand the limitations of a particular set of test parameters, and will be able to determine appropriate parameters for other types of polymers and blends.

ISO 811:1981

This method describes the resistance of a fabric to by penetrate by water. A hydrostatic head support by the prepared substrates is subject to a steadily increasing pressure of water, until penetration is visually observed on 3 places. The area evaluated is 100 cm2, increasing of pressure is 10cm H2O/min and ionized water was maintained at 200C. Side in contact with water was the one subject to extrusion coating. Results are recorded on mbar.

WVTR TAPPI 523 om-02

This method is used to evaluate rapidly, the water vapor transfer rate (WVTR) of sheets. A specimen sheet of 50 $cm^2$ is clamped between a high-humidity chamber (90% RH) and a dry chamber (5% or less RH), and the rate change of humidity in the dry chamber is determined at 38°C. By calibration these dynamic test results are converted to grams of moisture per square meter-day.

Vicat softening temperatures are measured in accordance with ASTM D1525-07. The term "softening temperature," as used herein, refers to the Vicat softening temperature.

The densities of the ethylene-based polymers and propylene-based polymers, and other polyolefins, are measured in accordance with ASTM D-792-00. ASTM D-792-00 can also be used to measure density of other polymers as noted in this test.

Melt indexes ($I_2$) of ethylene-based polymers are measured in accordance with ASTM D-1238-04, condition 190°C/2.16 kg. ASTM D-1238-04 can also be used to measure melt index of other polymers as noted in this test. The melt flow rates (MFR) of propylene-based polymers are measured in accordance with ASTM D-1238-04, condition 230°C/2.16 kg.

The molecular weight distributions for the ethylene based polymers can be determined with a chromatographic system consisting of either a Polymer Laboratories Model PL-210 or a Polymer Laboratories Model PL-220. The column and carousel compartments are operated at 140°C. The columns are three Polymer Laboratories 10-micron Mixed-B columns. The solvent is 1,2,4 trichlorobenzene. The samples are prepared at a concentration of 0.1 grams of polymer in 50 milliliters of solvent. The solvent used to prepare the samples contains 200 ppm of butylated hydroxytoluene (BHT). Samples are prepared by agitating lightly for two hours at 160°C. The injection volume is 100 microliters, and the flow rate is 1.0 milliliters/minute.

A fifth-order polynomial fit of the calibration of the gel permeation chromatography (GPC) column set, is performed with 21 narrow molecular weight distribution polystyrene standards with molecular weights ranging from 580 to 8,400,000, arranged in six "cocktail" mixtures, with at least a decade of separation between individual molecular weights. The standards are purchased from Polymer Laboratories (UK). The polystyrene standards are prepared at 0.025 grams in 50 milliliters of solvent for molecular weights equal to, or greater than, 1,000,000, and at 0.05 grams in 50 milliliters of solvent for molecular weights less than 1,000,000. The polystyrene standards are dissolved at 80°C with gentle agitation for 30 minutes. The narrow standards mixtures are run first, and in order of decreasing highest molecular weight component, to minimize degradation. The polystyrene standard peak molecular weights are converted to polyethylene molecular weights using the following equation (as described in Williams and Ward, J. Polym. Sci., Polym. Let., 6, 621 (1968)).:

$$M_{polyethylene} = A \times (M_{polystyrene})^B,$$

where M is the molecular weight, A has a value of 0.4315 and B is equal to 1.0.

Polyethylene equivalent molecular weight calculations are performed using Viscotek TriSEC software Version 3.0. The molecular weights for propylene-based polymers can be determined using Mark-Houwink ratios according to ASTM D6474.9714-1, where, for polystyrene a = 0.702 and log K = -3.9, and for polypropylene, a = 0.725 and log K = -3.721. For propylene-based samples, the column and carousel compartments are operated at 160°C.

Number average molecular weight, Mn, of a polymer is expressed as the first moment of a plot of the number of molecules in each molecular weight range, against the molecular weight. In effect, this is the total molecular weight of all molecules divided by the number of molecules, and is calculated in the usual manner according to the following formula:

$$Mn = \Sigma\, ni\, Mi\, /\, \Sigma\, ni\, =\, w/\, \Sigma\, (wi/Mi)\,,$$

where

ni = number of molecules with molecular weight Mi
w = total weight of material
and $\Sigma$ ni = total number of molecules

Weight average molecular weight, Mw, is calculated in the usual manner according to the following formula: Mw = $\Sigma$ wi* Mi, where wi* and Mi are the weight fraction and molecular weight, respectively, of the ith fraction eluting from the GPC column.

The ratio of these two molecular weight averages ($M_w$ and $M_n$), the molecular weight distribution (MWD or $M_w/M_n$), is used herein to define the breadth of the molecular weight distribution.

Percent crystallinity for ethylene-based and propylene-based polymers can be determined by Differential Scanning Calorimetry (DSC) using a TA Instruments Model Q1000 Differential Scanning Calorimeter. A sample of around 5 to 8 mg size is cut from the material to be tested, and placed directly in the DSC pan for analysis. The sample is first heated at a rate of about 10°C/min to 180°C for ethylene-based polymers (230°C for propylene-based polymers), and held isothermally for three minutes at that temperature to ensure complete melting (the first heat). Then the sample is cooled at a rate of 10°C per minute to -60°C for ethylene-based polymers (-40°C for propylene-based polymers), and held there isothermally for three minutes, after which, it is again heated (the second heat) at a rate of 10°C per minute until complete melting, The thermogram from this second heat is referred to as the "second heat curve." Thermograms are plotted as watts/gram versus temperature.

The percent crystallinity in the ethylene-based polymers may be calculated using heat of fusion data, generated in the second heat curve (the heat of fusion is normally computed automatically by typical commercial DSC equipment, by integration of the relevant area under the heat curve). The equation for ethylene-based samples is:
% Cryst. = ($H_f \div 292$ J/g) x 100; and the equation for propylene-based samples is:
% Cryst. = ($H_f \div 165$ J/g) x 100. The "% Cryst." represents the percent crystallinity and "$H_f$" represents the heat of fusion of the polymer in Joules per gram (J/g).

The melting point(s) ($T_m$) of the polymers can be determined from the second heat curve obtained from DSC, as described above. The crystallization temperature ($T_c$) can be determined from the first cooling curve. The term "melting temperature," as used herein, refers to the highest DSC melting point (Tm).

EXPERIMENTAL

Coated substrates were prepared with the following layers (second layer between first layer and web):

i) a first layer,
ii) a second layer, and
iii) a woven web.

Suitable polymers for the second layer included, but are not limited, to propylene-based polymers and/or ethylene-based polymers. Suitable polymer for the first layer, include, but are not limited to propylene-based polymers and blends of propylene-based polymers with an ethylene-based polymer, such as a low density polyethylene (for example, 5 to 40 or 10 to 30 weight percent of the ethylene-based polymer, based on the weight of the composition). The film compositions were prepared by a Co-Extrusion Coating manufacturing procedure. The coated substrates were perforated with small holes to form a breathable coated substrate. Afterwards, the perforated substrates were subject to a minimal compression force via the use of a hot roll laminator. The force applied by the hot roll laminator was sufficient enough to pass the substrates throw the rolls. Each film was examined by microcopy to see if initial perforations were closed.

Moisture properties on prepared substrates was examined before and after passing throw hot roll laminator to see improvement on barrier and/or resistance to moisture. Moisture barrier was determined using WVTR, according to TAPPI 523 om-02 and Hydrostatic Pressure Test ISO 811:1981.

Substrates compositions and hot roll laminator conditions were selected to mimic those parameter applied on powder packaging manufacturing process. In a different packaging process, the respective parameters would be determined accordingly.

*Materials*

The polymeric resins used in this study are shown on Table 3. All of the resins listed, contained one or more processing additives and one or more stabilizers.

TABLE 3 - Polymeric Resins

| Polymer | Type | Melt Flow Rate (g/10min@ 230°C, 2,16kg) ASTM 1238-04 | Density (g/cc) ASTM D792-00 | Melting Temperature | Vicat Temperature | Process |
|---|---|---|---|---|---|---|
| IN 64 | Random Polypropylene | 42 | 0.92 | 145°C | 127 °C | Gas Phase |
| Polymer | Type | Melt Index (g/10min@190° C, 2,16kg) ASTM 1238-04 | Density (g/cc) ASTM D792-00 | | | |
| VE50 | Propylene/Ethylene Copolymer | 6-10 | 0.880-0.890 | 106°C | 70°C | Solution |
| EG 84 | Ethylene/Octene Copolymer | 14-22 | 0.877-0.883 | 77 °C | 45°C | Solution |
| AM 10 | Ethylene/Ethyl Acrylate Copolymer | 10-14 | 0.929-0.932 | 95°C | 49°C | Solution |
| LD 70 | Low Density Polyethylene Homopolymer | 3.7-4.5 | 0.920-0.923 | 110°C | 98°C | High Pressure Autoclave |

*Substrates Fabrication*

Representative substrates were prepared by coextrusion coating of selected first and second layer, and each layer was coated on top of woven web, in their respect order, according to conditions described on Table 4. All samples were prepared using DAVIS-STANDARD extrusion coating line with air gap of 180 mm, chill roll temperature of 18°C, and line speed of 150 mpm. Before coextrusion coating, the woven web was corona treated (at 3 kW and 9 mpm).

TABLE 4 - Substrates Fabrication - Coextrusion Process

| | | REFERENCE Substrate | Substrate 1 | Substrate 2 | Substrate 3 | Substrate 4 |
|---|---|---|---|---|---|---|
| | Polymeric Resin* | 85% IN 364 + 15% LD 70 | 85% IN 64 + 15% LD 70 | 85% IN 64 + 15% LD 70 | 85% IN 64 + 15% LD 70 | 85% IN 64 + 15% LD 70 |
| Extruder 1 | Melt Pressure (bar) | 67 | 72 | 67 | 64 | 106 |
| Extruder 1 | Melt Temperature (°C) | 294 | 294 | 294 | 294 | 294 |
| Extruder 1 | Output ( kg/h) | 135 | 137 | 138 | 135 | 117 |

(continued)

|  |  | REFERENCE Substrate | Substrate 1 | Substrate 2 | Substrate 3 | Substrate 4 |
|---|---|---|---|---|---|---|
|  | Polymeric Resin | 85% IN 64 + 15% LD 70 | VE 50 | EG 84 | AM 10 | VE 50 |
| Extruder 2 | Melt Pressure (bar) | 56 | 79 | 55 | 38 | 58 |
| Extruder 2 | Melt Temperature ( °C) | 296 | 297 | 296 | 296 | 296 |
| Extruder 2 | Output (kg/h) | 33 | 35 | 36 | 33 | 26 |
|  | Polymeric Resin | NA | NA | NA | NA | VE 50 |
| Extruder 3 | Melt Pressure (bar) |  |  |  |  | 82 |
| Extruder 3 | Melt Temperature ( °C) |  |  |  |  | 290 |
| Extruder 3 | Output ( kg/h) |  |  |  |  | 35 |
| *All percentages are weight percentages. | | | | | | |

Descriptions of the substrate compositions are listed on Table 5. In all the cases, the same web (PP-based) was used, Reference substrate correspond to a web coated with 25g/m$^2$ of 85% IN 64 + 15% LD 70, and is used as a reference to compare barrier to moisture and hydro static pressure with those properties of substrates 1 to 4, Substrates 1 to 3 were prepared by coating "5g/ m2 of polymer or blend" as the second layer and "20g/ m2 of polymer or blend" as the first layer. Finally, substrate 4 was prepared with a reverse coating weight distribution: 20g/ m2 as the second layer and 5g/ m2 as the first layer.

TABLE 5 - Substrates Description

|  |  | (g/m2) | Extruder | (g/m2) | Extruder | (g/m2) | Extruder | Total Aim coatin g (g/m$^2$) |
|---|---|---|---|---|---|---|---|---|
| REF. Subst. | Web | 5 | 2 | 20 | 1 |  |  | 25 |
| Subst. 1 | Web | 5 | 2 | 20 | 1 |  |  | 25 |
| Subst. 2 | Web | 5 | 2 | 20 | 1 |  |  | 25 |
| Subst. 3 | Web | 5 | 2 | 20 | 1 |  |  | 25 |
| Subst. 4 | Web | 5 | 2 | 15 | 3 | 5 | 1 | 25 |

*Perforations of the Substrates*

All Substrates prepared were perforated to obtain an air permeability of at least 30 m$^3$/hr with same perforation density. Small size corresponds to 45 micron holes, while big size corresponds to 60 micron holes, each on average. Samples were evaluated on a LEICA microscope DMLB, using magnification 400 and resolution 2088 x 1552.

*Closure of Perforations*

In Table 6, the minimum temperature of the hot roller needed to seal perforations is indicated. Only upper roll was heated to seal the perforations. The sealed holes were observed on a microscope a LEICA microscope DMLB, using magnification 400 and resolution 2088 x 1552, before WVTR and HSPT evaluations.

TABLE 6 - Holes Seability

| SUBSTRATE 1 | Web / 5g VE 50 / 20g (85% IN 64 + 15% LD 70) | | | |
|---|---|---|---|---|
| | TEMPERATURE | 110 | 100 | 90 |
| Perforation Size Small Big | | CLOSED | CLOSED HOLES | HOLES HOLES |
| SUBSTRATE 4 | Web / 20g VE 50 / 5g (85% IN 64 + 15% LD 70) | | | |
| | TEMPERATURE | 110 | 100 | 90 |
| Perforation Size Small Big | | CLOSED | CLOSED CLOSED | HOLES HOLES |

The perforations were sealed using a hot roll laminator (HL-100 from Cheminstrument). All samples were passed at 110°C, on the upper roll, which is the one in contact with extrusion coated surface. Line Speed was set at 6m/min, with a minimum air gap to have enough pressure to have the film move throw rolls. Air gap used on examples was 35mm, as at 34.5 mm samples did not pass throw. Prepared samples were evaluated for WVTR and the Hydrostatic Pressure Test (HSPT), each previously described. TABLE 7 record values, before and after hole closure.

TABLE 7 - WVTR and HWP

| SUBSTRATE REFERENCE | WVTR (g/m2 24hr) | Thickness (microns) | HSPT (mbar) |
|---|---|---|---|
| Before reclosing | | | 22.0 |
| After reclosing | | | 19.0 |
| SUBSTRATE 2 | | | |
| Before reclosing | 2276.07 | 141.6 | 10.3 |
| After reclosing | 508.15 | 140 | 22.6 |
| SUBSTRATE 3 | | | |
| Before reclosing | 1679.2 | 138 | 25.2 |
| After reclosing | 863.97 | 135.7 | 40.3 |

Described experiment demonstrated that hole sealability is possible by applying temperature and pressure to prepared substrates, and thus, improving barrier to moisture and hydrostatic pressure. Such examples can be used to package powdery goods.

## Claims

1.  A perforated coated substrate comprising at least the following:

    i) a first layer,
    ii) a second layer, and
    iii) a woven and/or non woven web;

    wherein the first layer is adjacent to the second layer, and wherein the second layer is adjacent to the web; wherein the second layer has a lower softening and/or melting temperature, as compared with the respective softening and/or melting temperatures of the first layer, and the respective softening and/or melting temperatures of the web; and wherein the layers of the coated substrate have perforations with a common center; wherein the second layer is formed from a composition comprising a propylene-based polymer; and

wherein the composition used to form the second layer has a Vicat softening point at least 20 °C lower than the respective Vicat softening point of the composition used to form the first layer;

wherein the coated substrate is formed by coextruding at least the first layer and the second layer on top of the web; and

wherein the web is located as an exterior layer of the perforated coated substrate.

2. The coated substrate of claim 1, wherein, when the coated substrate is exposed to an elevated temperature greater than or equal to, the Vicat softening point of the second layer, the second layer softens or melts to such an extent, that upon exposure to a compression force, a sufficient number of perforations are sealed in the second layer, to impart an increased moisture barrier to the coated substrate.

3. The coated substrate of claim 2, wherein the exposure to the elevated temperature and the exposure to the compression force take place simultaneously.

4. The coated substrate of any of the preceding claims, wherein the moisture barrier of the coated substrate is determined using ISO811:1981.

5. The coated substrate of claim 1, wherein the propylene-based polymer is selected from propylene-based interpolymers.

6. The coated substrate of claim 1 or claim 5, wherein the propylene-based polymer has a melt flow rate (MFR) from 1 g/10 min to 100 g/10 min.

7. The coated substrate of any of claims 1, 5 or 6, wherein the propylene-based polymer has a density from 0.84 to 0.92 g/cc.

8. The coated substrate of any of claims 1-4, wherein the second layer is formed from a composition further comprising an ethylene-based polymer and/or an olefin multi-block interpolymer.

9. The coated substrate of claim 8, wherein the ethylene-based polymer is a homogeneously branched linear ethylene/$\alpha$-olefin interpolymer.

10. The coated substrate of claim 8, wherein the ethylene-based polymer is a homogeneously branched substantially linear ethylene/$\alpha$-olefin interpolymer.

11. The coated substrate of any of the preceding claims, wherein the first layer is formed from a composition comprising at least one polymer selected from the group consisting of the following: a polypropylene homopolymer, a propylene/ethylene interpolymer, a propylene/$\alpha$-olefin interpolymer, a LLDPE, a HDPE, a LDPE, and a combination thereof.

12. The coated substrate of claim 11, wherein the first layer is formed from a composition comprising at least one polymer selected from the group consisting of the following: a polypropylene homopolymer, a propylene/ethylene interpolymer, a propylene/a-olefin interpolymer, a LDPE, and a combination thereof.

13. The coated substrate of any of the preceding claims, wherein the second layer has a Vicat softening point at least 40 °C lower than the respective Vicat softening point of the first layer.

14. The coated substrate of any of the preceding claims, wherein the coated substrate is formed by an extrusion coating process.

15. A package prepared from the coated substrate of any of the preceding claims.

16. The coated substrate of claim 1, wherein the woven and/or the non woven web is/are formed from a composition comprising a propylene-based polymer.

17. The coated substrate of claim 1, wherein the second layer is formed from a composition comprising from 15 to 50 weight percent of a low density polyethylene, based on the weight of the composition, and from 50 to 85 weight percent of the propylene-based polymer, based on the weight of the composition.

**18.** The coated substrate of claim 1 or 17, wherein the first layer is formed from a composition comprising a LDPE that has a melt index (I2) from 3 to 9 g/10 min, and a density from 0.91 to 0.93 g/cc.

**19.** The coated substrate of claim 1, wherein the coated substrate consists essentially of the first layer, the second layer, and the woven and/or non woven web.


**Patentansprüche**

**1.** Ein perforiertes beschichtetes Substrat, beinhaltend mindestens das Folgende:

  i) eine erste Schicht,
  ii) eine zweite Schicht und
  iii) eine gewebte Bahn und/oder eine Vliesbahn;

wobei die erste Schicht an die zweite Schicht angrenzt und wobei die zweite Schicht an die Bahn angrenzt;
wobei die zweite Schicht im Vergleich zu den jeweiligen Erweichungs- und/oder Schmelztemperaturen der ersten Schicht und den jeweiligen Erweichungs- und/oder Schmelztemperaturen der Bahn eine niedrigere Erweichungs- und/oder Schmelztemperatur aufweist; und
wobei die Schichten des beschichteten Substrats Perforationen mit einem gemeinsamen Mittelpunkt aufweisen;
wobei die zweite Schicht aus einer Zusammensetzung gebildet ist, die ein propylenbasiertes Polymer beinhaltet; und
wobei die zum Bilden der zweiten Schicht verwendete Zusammensetzung einen Vicat-Erweichungspunkt aufweist, der mindestens 20 °C niedriger ist als der jeweilige Vicat-Erweichungspunkt der zum Bilden der ersten Schicht verwendeten Zusammensetzung;
wobei das beschichtete Substrat durch Coextrudieren mindestens der ersten Schicht und der zweiten Schicht auf die Oberseite der Bahn gebildet wird; und
wobei die Bahn als eine äußere Schicht des perforierten beschichteten Substrats lokalisiert ist.

**2.** Beschichtetes Substrat gemäß Anspruch 1, wobei, wenn das beschichtete Substrat einer erhöhten Temperatur von mehr als oder gleich dem Vicat-Erweichungspunkt der zweiten Schicht ausgesetzt wird, die zweite Schicht in einem solchen Ausmaß weich wird oder schmilzt, dass bei Aussetzen gegenüber einer Kompressionskraft eine ausreichende Anzahl von Perforationen in der zweite Schicht versiegelt wird, um dem beschichteten Substrat eine verstärkte Feuchtigkeitsbarriere zu verleihen.

**3.** Beschichtetes Substrat gemäß Anspruch 2, wobei das Aussetzen gegenüber der erhöhten Temperatur und das Aussetzen gegenüber der Kompressionskraft gleichzeitig stattfinden.

**4.** Beschichtetes Substrat gemäß einem der vorhergehenden Ansprüche, wobei die Feuchtigkeitsbarriere des beschichteten Substrats unter Verwendung von ISO811:1981 bestimmt wird.

**5.** Beschichtetes Substrat gemäß Anspruch 1, wobei das propylenbasierte Polymer ausgewählt ist aus propylenbasierten Interpolymeren.

**6.** Beschichtetes Substrat gemäß Anspruch 1 oder Anspruch 5, wobei das propylenbasierte Polymer eine Schmelzflussrate (MFR) von 1 g/10 min bis 100 g/10 min aufweist.

**7.** Beschichtetes Substrat gemäß einem der Ansprüche 1, 5 oder 6, wobei das propylenbasierte Polymer eine Dichte von 0,84 bis 0,92 g/cm$^3$ aufweist.

**8.** Beschichtetes Substrat gemäß einem der Ansprüche 1-4, wobei die zweite Schicht aus einer Zusammensetzung gebildet ist, die ferner ein ethylenbasiertes Polymer und/oder ein Olefin-Multiblock-Interpolymer beinhaltet.

**9.** Beschichtetes Substrat gemäß Anspruch 8, wobei das ethylenbasierte Polymer ein homogen verzweigtes lineares Ethylen/$\alpha$-Olefin-Interpolymer ist.

**10.** Beschichtetes Substrat gemäß Anspruch 8, wobei das ethylenbasierte Polymer ein homogen verzweigtes, im Wesentlichen lineares Ethylen/a-Olefin-Interpolymer ist.

**11.** Beschichtetes Substrat gemäß einem der vorhergehenden Ansprüche, wobei die erste Schicht aus einer Zusammensetzung gebildet ist, beinhaltend mindestens ein Polymer ausgewählt aus der Gruppe, bestehend aus dem Folgenden: einem Polypropylen-Homopolymer, einem Propylen/Ethylen-Interpolymer, einem Propylen/$\alpha$-Olefin-Interpolymer, einem LLDPE, einem HDPE, einem LDPE und einer Kombination davon.

**12.** Beschichtetes Substrat gemäß Anspruch 11, wobei die erste Schicht aus einer Zusammensetzung gebildet ist, beinhaltend mindestens ein Polymer ausgewählt aus der Gruppe, bestehend aus dem Folgenden: einem Polypropylen-Homopolymer, einem Propylen/Ethylen-Interpolymer, einem Propylen/$\alpha$-Olefin-Interpolymer, einem LDPE und einer Kombination davon.

**13.** Beschichtetes Substrat gemäß einem der vorhergehenden Ansprüche, wobei die zweite Schicht einen Vicat-Erweichungspunkt aufweist, der mindestens 40 °C niedriger ist als der jeweilige Vicat-Erweichungspunkt der ersten Schicht.

**14.** Beschichtetes Substrat gemäß einem der vorhergehenden Ansprüche, wobei das beschichtete Substrat durch ein Extrusionsbeschichtungsverfahren gebildet wird.

**15.** Eine Packung, zubereitet aus dem beschichteten Substrat gemäß einem der vorhergehenden Ansprüche.

**16.** Beschichtetes Substrat gemäß Anspruch 1, wobei die gewebte Bahn und/oder die Vliesbahn aus einer Zusammensetzung, die ein propylenbasiertes Polymer beinhaltet, gebildet ist/sind.

**17.** Beschichtetes Substrat gemäß Anspruch 1, wobei die zweite Schicht aus einer Zusammensetzung, beinhaltend zu 15 bis 50 Gewichtsprozent ein Polyethylen niedriger Dichte, bezogen auf das Gewicht der Zusammensetzung, und zu 50 bis 85 Gewichtsprozent das propylenbasierte Polymer, bezogen auf das Gewicht der Zusammensetzung, gebildet ist.

**18.** Beschichtetes Substrat gemäß Anspruch 1 oder 17, wobei die erste Schicht aus einer Zusammensetzung, beinhaltend ein LDPE, das einen Schmelzindex (I2) von 3 bis 9 g/10 min und eine Dichte von 0,91 bis 0,93 g/cm$^3$ aufweist, gebildet ist.

**19.** Beschichtetes Substrat gemäß Anspruch 1, wobei das beschichtete Substrat im Grunde aus der ersten Schicht, der zweiten Schicht und der gewebten Bahn und/oder Vliesbahn besteht.

**Revendications**

**1.** Un substrat revêtu perforé comprenant au moins les éléments suivants :

i) une première couche,
ii) une deuxième couche, et
iii) une toile tissée et/ou non tissée ;

dans lequel la première couche est adjacente à la deuxième couche, et dans lequel la deuxième couche est adjacente à la toile ;
dans lequel la deuxième couche a une température de ramollissement et/ou de fusion inférieure en comparaison aux températures de ramollissement et/ou de fusion respectives de la première couche, et aux températures de ramollissement et/ou de fusion de la toile ; et
dans lequel les couches du substrat revêtu ont des perforations avec un centre commun ;
dans lequel la deuxième couche est formée à partir d'une composition comprenant un polymère à base de propylène ; et
dans lequel la composition utilisée pour former la deuxième couche a un point de ramollissement Vicat inférieur d'au moins 20 °C au point de ramollissement Vicat respectif de la composition utilisée pour former la première couche ;
dans lequel le substrat revêtu est formé par au moins la co-extrusion de la première couche et de la deuxième couche par-dessus la toile ; et
dans lequel la toile est située en tant que couche extérieure du substrat revêtu perforé.

**2.** Le substrat revêtu de la revendication 1, dans lequel, lorsque le substrat revêtu est exposé à une température élevée supérieure ou égale au point de ramollissement Vicat de la deuxième couche, la deuxième couche se ramollit ou fond de telle sorte qu'au moment de l'exposition à une force de compression, un nombre suffisant de perforations sont scellées dans la deuxième couche, afin de conférer une barrière améliorée contre l'humidité au substrat revêtu.

3. Le substrat revêtu de la revendication 2, dans lequel l'exposition à la température élevée et l'exposition à la force de compression ont lieu simultanément.

4. Le substrat revêtu de n'importe lesquelles des revendications précédentes, dans lequel la barrière contre l'humidité du substrat revêtu est déterminée à l'aide de l'ISO 811:1981.

5. Le substrat revêtu de la revendication 1, dans lequel le polymère à base de propylène est sélectionné parmi des interpolymères à base de propylène.

6. Le substrat revêtu de la revendication 1 ou de la revendication 5, dans lequel le polymère à base de propylène a un indice de fluidité à l'état fondu (MFR) allant de 1 g/10 min à 100 g/10 min.

7. Le substrat revêtu de n'importe lesquelles des revendications 1, 5 ou 6, dans lequel le polymère à base de propylène a une masse volumique allant de 0,84 à 0,92 g/cm$^3$.

8. Le substrat revêtu de n'importe lesquelles des revendications 1 à 4, dans lequel la deuxième couche est formée à partir d'une composition comprenant en outre un polymère à base d'éthylène et/ou un interpolymère multibloc d'oléfine.

9. Le substrat revêtu de la revendication 8, dans lequel le polymère à base d'éthylène est un interpolymère d'éthylène/$\alpha$-oléfine linéaire ramifié de manière homogène.

10. Le substrat revêtu de la revendication 8, dans lequel le polymère à base d'éthylène est un interpolymère d'éthylène/$\alpha$-oléfine substantiellement linéaire ramifié de manière homogène.

11. Le substrat revêtu de n'importe lesquelles des revendications précédentes, dans lequel la première couche est formée à partir d'une composition comprenant au moins un polymère sélectionné dans le groupe constitué des éléments suivants : un homopolymère polypropylène, un interpolymère de propylène/éthylène, un interpolymère de propylène/$\alpha$-oléfine, un PEBDL, un PEHD, un PEBD et une combinaison de ceux-ci.

12. Le substrat revêtu de la revendication 11, dans lequel la première couche est formée à partir d'une composition comprenant au moins un polymère sélectionné dans le groupe constitué des éléments suivants : un homopolymère polypropylène, un interpolymère de propylène/éthylène, un interpolymère de propylène/$\alpha$-oléfine, un PEBD, et une combinaison de ceux-ci.

13. Le substrat revêtu de n'importe lesquelles des revendications précédentes, dans lequel la deuxième couche a un point de ramollissement Vicat inférieur d'au moins 40 °C au point de ramollissement Vicat respectif de la première couche.

14. Le substrat revêtu de n'importe lesquelles des revendications précédentes, dans lequel le substrat revêtu est formé par un procédé de revêtement par extrusion.

15. Un emballage préparé à partir du substrat revêtu de n'importe lesquelles des revendications précédentes.

16. Le substrat revêtu de la revendication 1, dans lequel la toile tissée et/ou la toile non tissée est/sont formée(s) à partir d'une composition comprenant un polymère à base de propylène.

17. Le substrat revêtu de la revendication 1, dans lequel la deuxième couche est formée à partir d'une composition comprenant de 15 à 50 pour cent en poids d'un polyéthylène basse densité, rapporté au poids de la composition, et de 50 à 85 pour cent en poids du polymère à base de propylène, rapporté au poids de la composition.

18. Le substrat revêtu de la revendication 1 ou de la revendication 17, dans lequel la première couche est formée à partir d'une composition comprenant un PEBD qui a un indice de fusion (I2) allant de 3 à 9 g/10 min, et une masse volumique allant de 0,91 à 0,93 g/cm$^3$.

**19.** Le substrat revêtu de la revendication 1, le substrat revêtu étant constitué essentiellement de la première couche, de la deuxième couche, et de la toile tissée et/ou non tissée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007008753 A
- US 20060037884 A
- US 6101685 A
- US 5988881 A
- US 6235658 B
- US 4291082 A
- US 5493844 A
- US 4657610 A
- US 5845995 A
- US 20030082969 A
- US 20070178784 A
- WO 2006023205 A
- WO 2007050559 A
- WO 199801300 A
- WO 199103374 A
- US 6919407 B
- US 5504172 A
- WO 0001745 A
- US 98899907 P
- US 08082599 W
- US 3645992 A, Elston
- US 5272236 A
- US 5278272 A
- US 6054544 A
- US 6335410 B
- US 6723810 B
- US 4076698 A, Anderson
- EP 0129368 A
- EP 0260999 A
- US 4701432 A
- US 4937301 A
- US 4935397 A
- US 5055438 A
- WO 9007526 A
- US 37683506 A
- US 20060199930 A
- WO 2005090427 A
- US 20060199931 A
- US 20060199914 A
- US 20060199912 A
- US 20060199911 A
- US 20060199910 A
- US 20060199908 A
- US 20060199907 A
- US 20060199906 A
- US 20060199905 A
- US 20060199897 A
- US 20060199896 A
- US 20060199887 A
- US 20060199884 A
- US 20060199872 A
- US 20060199744 A
- US 20060199030 A
- US 20060199006 A
- US 20060199983 A
- DE 3236770 A1
- US 5288531 A, Falla
- US 5721025 A, Falla
- US 5360648 A, Falla
- US 6117465 A, Falla
- US 6723398 B, Chum
- US 4927888 A, Strait
- US 4950541 A, Tabor
- US 4762890 A, Strait
- US 5346963 A, Hughes
- US 4684576 A, Tabor

### Non-patent literature cited in the description

- **RANDALL.** *Rev. Micromole. Chem. Phys.,* 1989, vol. C29 (2&3), 285-297
- **ZIMM, B.H. ; STOCKMAYER, W.H.** *J. Chem. Phys.,* 1949, vol. 17, 1301
- **RUDIN, A.** Modern Methods of Polymer Characterization. John Wiley & Sons, 1991, 103-112
- Packaging Machinery Operation. **C. GLENN DAVIS.** Form-Fill-Sealing. Packaging Machinery Manufacturers Institute, 2000
- The Wiley Encyclopedia of Packaging Technology. John Wiley & Sons, 364-369
- **KENTON R. OSBORN ; WILMER A JENKENS.** Plastic Coated substrates, Technology and Packaging Applications. Technomic Publishing Co., Inc, 1992, 39-105
- **WILLIAMS ; WARD.** *J. Polym. Sci., Polym. Let.,* 1968, vol. 6, 621